# EUROPÄISCHE PATENTSCHRIFT

(11) **EP 1 428 371 B1**
(45) Veröffentlichungstag und Bekanntmachung des Hinweises auf die Patenterteilung: **23.02.2005**
(21) Anmeldenummer: 02782684.1
(22) Anmeldetag: 20.09.2002
(51) Int. Cl.: H04L 29/06

(54) **VERFAHREN ZUM ÜBERTRAGEN EINES DATENSTROMS VON EINEM PRODUZENTEN AN EINE MEHRZAHL VON ZUSCHAUERN**
METHOD FOR TRANSMITTING A DATA STREAM FROM A PRODUCER TO A PLURALITY OF VIEWERS
PROCEDE DE TRANSMISSION D'UN FLUX DE DONNEES D'UN PRODUCTEUR A UNE PLURALITE DE SPECTATEURS

(30) Priorität: 20.09.2001 DE 10146347
(43) Veröffentlichungstag der Anmeldung: 16.06.2004
(73) Patentinhaber: 1 Mal 1 Software GmbH, 90762 Fürth (DE)
(72) Erfinder: WELCK, Johannes, 91096 Möhrendorf (DE); MILLER, Martin, 90763 Fürth (DE); KIRCHHÜBEL, Kurt, 90579 Langenzenn (DE); MARGULL, Ulrich, 93055 Regensburg (DE)
(74) Vertreter: Kritzenberger & Zeuner
(86) Internationale Anmeldenummer: PCT/DE2002/003558
(87) Internationale Veröffentlichungsnummer: WO 2003/026247

(56) Entgegenhaltungen:
- WO-A-01/65767
- WO-A-01/74076
- FURHT B ET AL: "IP SIMULCAST: A NEW TECHNIQUE FOR MULTIMEDIA BROADCASTING OVER THE INTERNET" CIT. JOURNAL OF COMPUTING AND INFORMATION TECHNOLOGY, ZAGREB, HR, Bd. 6, Nr. 3, September 1998 (1998-09), Seiten 245-254, XP000870379 ISSN: 1330-1136

## Beschreibung

### Technisches Gebiet

Die Erfindung betrifft Übertragungen von Sendungen in Datennetzen, mit denen potentiell eine Vielzahl von Zuschauern erreicht werden kann. Speziell betrifft die Erfindung ein Verfahren zum Übertragen eines Datenstroms, insbesondere eines reduzierbaren Datenstroms von einem Produzenten an eine Mehrzahl von Zuschauern, wobei Produzent und Zuschauer Teilnehmer eines Netzwerks mit Punkt-zu-Punkt-Verbindungen sind.

### Stand der Technik

Das Internet, ursprünglich für statische Daten konzipiert, wird mehr und mehr auch zu einer Plattform, auf der Multimediadaten wie Audio- und Videodaten transportiert werden. Herkömmlich läuft die Datenübertragung im Internet derart ab, daß die zur Verfügung stehenden Daten auf einem Server bereitliegen und darauf warten, daß sie ein Anwender abruft. Dabei liegt immer eine gewisse Zeitspanne zwischen der Produktion der Daten und der Verarbeitung beim Anwender.

Einen anderen Ansatz verfolgt die Streamingtechnologie, bei der die übermittelten Inhalte, beispielsweise eine Fernsehsendung oder ein Radioprogramm, bereits während der Übermittlung beim Anwender erscheinen, dieser also das Fernseh- oder Radioprogramm live verfolgen kann. Dabei ist in der Regel weder erforderlich noch erwünscht, daß die gesamte Sendung vom Anwender aufgezeichnet wird. Man spricht bei dieser Art der Übertragung auch von einer Echtzeitübertragung, da die Daten ohne größere Zeitverschiebung beim Anwender vorliegen und wiedergegeben werden.

Eine zu übertragende Sendung besteht dabei für die Zwecke der vorliegenden Anmeldung aus einer oder mehreren Arten verschiedener Multimedia-Daten, wie beispielsweise Bewegtbild, Ton, Graphiken, Texte, Applikationen oder sonstigen beliebigen Daten. Der gesamte Inhalt einer Sendung bildet in seiner zeitlichen Abfolge einen Datenstrom, der bei der Übertragung einer Sendung von dem Produzenten an die Zuschauer übermittelt werden muß.

Dabei stellte sich das grundsätzliche Problem, daß das Zurverfügungstellen eines Datenstroms an eine Vielzahl von Zuschauern in Datennetzen in der Regel mit hohem Aufwand und großen Kosten verbunden ist.

Mit Hilfe sogenannter Multicast Technologien können Daten an viele Teilnehmer in einem Netzwerk gleichzeitig verteilt werden. Dazu ist jedoch eine spezielle Ausrüstung der Datennetze nötig, insbesondere müssen die Router Multicast-fähig sein. Zudem ist die Konfiguration und der Betrieb solche Netze schwierig und aufwendig.

In vielen Datennetzen ist deshalb keine Multicast-Technologie vorhanden, so ist beispielsweise im Internet im allgemeinen kein Multicast möglich. In großen Netzen, wie es beispielsweise das Internet darstellt, werden daher die Multimedia-Daten typischerweise direkt von den jeweiligen Produzenten an die einzelnen Zuschauer übertragen. Dazu baut der Zuschauer eine Punkt-zu-Punkt Verbindung zum Produzentenserver auf, beispielsweise eine TCP/IP (Transmission Control Protocol/Internet Protocol)- Verbindung oder eine UDP/IP-(User Datagram Protocol) basierte Verbindung in IP-basierten Netzen.

Alternativ kann der Produzent auch verschiedene Datenserver installieren oder die Dienste von bereits installierten Datenservern in Anspruch nehmen. In diesem Fall werden die Daten zunächst von dem Produzenten an die verschiedenen Datenserver verteilt. Ein Zuschauer, der die Daten empfangen will, wird an einen Datenserver verwiesen. Zwischen Datenserver und Zuschauer wird eine Punkt-zu-Punkt Verbindung aufgebaut, über die die Daten übertragen werden.

Nachteilig an diesen Verfahren ist, daß bei beiden Alternativen der Produzent eine ausreichende Netzwerkanbindung bereitstellen muß. Alle Daten werden über Punkt-zu-Punkt Verbindungen übertragen, an deren einem Ende sich ein Datenserver des Produzenten und an deren anderem Ende sich der Zuschauer befindet. Für jeden Zuschauer muß eine eigene Verbindung aufgebaut werden, so daß bei n Zuschauern die n-fache Übertragungskapazität vorhanden sein muß. Zudem fällt für den Produzenten die n-fache zu übertragende Datenmenge an, da die Daten ja zu jedem Zuschauer gesondert übertragen werden. Will der Produzent viele Zuschauer erreichen, so ist er gezwungen, große Bandbreiten zur Verfügung zu stellen. Hat er mit seiner Sendung Erfolg, so fallen große Mengen an übertragenen Daten an. In beiden Fällen hat der Produzent mit hohen Kosten zu rechnen.

Nachteilig ist zudem, daß die vorhandene Software aufgrund der komplexen Technik schwierig zu bedienen ist und eine spezielle Einarbeitung des Bedienpersonals erforderlich macht.

Die Patentanmeldung WO 01/65767 (07.09.2001) offenbart zwar ein Verfahren und ein System zur Optimierung des Datenstroms in einem Chaincast-Übertragungsverfahren. Jedoch wird die mögliche Teilnahme von Zuschauern deren Netzwerkkennung hinter einem Zugangsrechner verbergen ist weder explizit offenbart nach nahegelegt.

### Darstellung der Erfindung

Hier setzt die Erfindung an. Der Erfindung, wie sie in den Ansprüchen gekennzeichnet ist, liegt die Aufgabe zugrunde, ein Übertragungsverfahren der genannten Art anzugeben, das die genannten Nachteile des Stands der Technik vermeidet, insbesondere das die Übertragung eines Datenstroms an eine Vielzahl von Zuschauern auch bei geringer Sendebandbreite des Produzenten ermöglicht.

Diese Aufgabe wird durch das Übertragungsverfahren nach Anspruch 1 gelöst. Bevorzugte Ausgestaltungen des Verfahrens sind Gegenstand der Unteransprüche.

Die Erfindung stellt ein Verfahren zum Übertragen eines Datenstroms, insbesondere eines reduzierbaren Datenstroms von einem Produzenten an eine Mehrzahl von Zuschauern bereit, wobei Produzent und Zuschauer Teilnehmer eines Netzwerks mit Punkt-zu-Punkt-Verbindungen sind, wobei bei dem Verfahren
- der Produzent den Datenstrom über eine Punkt-zu-Punkt-Netzwerkverbindung an zumindest einen Zuschauer überträgt,
- zumindest ein Zuschauer den Datenstrom über eine Punkt-zu-Punkt-Netzwerkverbindung empfängt und zeitnah in identischer oder reduzierter Form an zumindest einen weiteren Zuschauer überträgt, und
- jeder Zuschauer entweder vom Produzenten oder einem anderen Zuschauer über eine Punkt-zu-Punkt-Netzwerkverbindung zeitnah mit dem Datenstrom in identischer oder reduzierter Form versorgt wird.

Die Erfindung beruht also auf dem Gedanken, die Datenverteilung ohne die Nutzung von Broadcastdiensten auf Netzwerkebene dadurch zu realisieren, daß der Produzent selbst nur wenige Zuschauer mit dem Datenstrom versorgt, und daß weitere Zuschauer nicht vom Produzenten direkt versorgt werden, sondern von anderen Zuschauern, die selbst bereits mit dem Datenstrom versorgt werden und die ausreichend Sendebandbreite zur Verfügung haben.

Dies ermöglicht es auch Teilnehmern mit geringer Bandbreite (beispielsweise einer 64 kBit/s Standard-Netzwerk-Anbindung) und Standard-PC-Ausrüstung Sendungen zu produzieren, die zeitnah von einer Vielzahl anderer Teilnehmer, beispielsweise mehreren tausend Zuschauern, angesehen werden können.

Zeitnah bedeutet dabei, daß bis auf einen technisch bedingten zeitlichen Versatz durch die Weiterleitung des Datenstroms eine produzierte Sendung von allen Zuschauern zeitgleich empfangen werden kann.

Die Übertragung kann zusätzlich verbessert werden, wenn reduzierbare Daten, insbesondere Bewegtbild- und Tondaten bei einzelnen Teilnehmern durch Reduktion der jeweils verfügbaren Bandbreite angepaßt werden.

Durch die Übertragung des Datenstroms vom Produzenten an einen oder mehrere Zuschauer, und dann von einem oder mehreren der Zuschauer an weitere Zuschauer entsteht für die Übertragung insgesamt eine Baumstruktur, die im folgenden als Übertragungsbaum bezeichnet wird. Dabei bildet der Produzent die Wurzel des Baumes und die Zuschauer die Knoten des Baumes. Jeder Knoten überträgt dabei entweder den Datenstrom an einen oder mehrere andere Knoten weiter, oder er stellt ein sogenanntes Blatt des Baumes dar, das den Datenstrom lediglich empfängt, aber nicht weiter überträgt.

Die Verbindungen zwischen den Knoten entsprechen den Punkt-zu-Punkt Netzwerkverbindungen zwischen einzelnen Teilnehmern.

In einer bevorzugten Ausgestaltung des Verfahrens tritt bei Ausfall eines Zuschauers, der einen weiteren Zuschauer mit dem Datenstrom versorgt, ein anderer Teilnehmer an der Übertragung für die Versorgung des weiteren Zuschauers an Stelle des ausgefallenen Zuschauers, indem zwischen dem weiteren Zuschauer und dem anderen Teilnehmer eine Punkt-zu-Punkt-Netzwerkverbindung aufgebaut wird, über die dieser dem weiteren Zuschauer den Datenstrom zeitnah in identischer oder reduzierter Form überträgt.

Dabei kann eine Vermittlungsinstanz dem weiteren Zuschauer nach einer entsprechenden Benachrichtigung den anderen Teilnehmer vermitteln, welcher dem weiteren Zuschauer den Datenstrom zeitnah in identischer oder reduzierter Form übertragen kann.

Ebenso ist es alternativ oder zusätzlich möglich, daß jedem Zuschauer, der Teilnehmer der Übertragung wird, ein Teilnehmer an der Übertragung vermittelt wird, der den Zuschauer zeitnah mit dem Datenstrom versorgt, sowie darüber hinaus zumindest ein weiterer Teilnehmer an der Übertragung bekannt gegeben wird, der voraussichtlich den Datenstrom an den Zuschauer beim Ausfall des versorgenden Teilnehmer zeitnah übertragen kann.

Bei Ausfall des versorgenden Teilnehmers kann sich dann der Zuschauer zunächst direkt mit einem Übertragungswunsch an den weiteren genannten Teilnehmer wenden. Kann dieser den Zuschauer mit dem Datenstrom versorgen, ist kein aufwendigerer Umweg über die Vermittlungsinstanz erforderlich, der Zuschauer kann ohne nennenswerte Verzögerung mit dem Datenstrom versorgt werden. Kann der genannte Teilnehmer die Versorgung nicht übernehmen, nennt er dem anfragenden Zuschauer einen weiteren möglichen Versorger oder verweist ihn an die Vermittlungsinstanz.

Durch die genannten Maßnahmen ist das Übertragungsverfahren selbstheilend, das heißt der Ausfall eines Zuschauers, der den Datenstrom weiterüberträgt, wird durch das System aufgefangen, der ausgefallene Zuschauer wird in seiner Funktion als Sender durch einen anderen Teilnehmer ersetzt. Dies geschieht, soweit möglichst, ohne Unterbrechung der Übertragung und ohne explizite Aktionen des versorgten Zuschauer.

Es ist bei dem Übertragungsverfahren vorteilhaft, wenn ein neuer Zuschauer Teilnehmer der Übertragung wird, indem
- der neue Zuschauer über eine Punkt-zu-Punkt-Netzwerk-verbindung eine Teilnahmeaufforderung an eine Vermittlungsinstanz sendet,
- die Vermittlungsinstanz dem neuen Zuschauer einen Teilnehmer an der Übertragung vermittelt, der den Datenstrom zeitnah an den neuen Zuschauer übertragen kann, und
- zwischen dem neuen Zuschauer und dem vermittelten Teilnehmer eine Punkt-zu-Punkt-Netzwerkverbindung aufgebaut wird, über die dieser dem neuen Zuschauer den Datenstrom zeitnah in identischer oder reduzierter Form überträgt.

Dabei kann die Vermittlungsinstanz dem neuen Zuschauer einen Teilnehmer an der Übertragung, der den Datenstrom zeitnah an den neuen Zuschauer übertragen kann, dadurch vermitteln, daß
a) die Vermittlungsstelle dem neuen Zuschauer über die Punkt-zu-Punkt-Netzwerkverbindung zumindest einen Teilnehmer an der Übertragung nennt,
b) geprüft wird, ob einer der genannten Teilnehmer den Datenstrom zeitnah an den neuen Zuschauer übertragen kann,
c) im Fall, daß keiner der genannten Teilnehmer selbst den Datenstrom zeitnah an den neuen Zuschauer übertragen kann, einer der genannten Teilnehmer dem neuen Zuschauer zumindest einen weiteren Teilnehmer an der Übertragung nennt, und
d) die Schritte b) und c) wiederholt werden, bis ein Teilnehmer an der Übertragung gefunden ist, der den Datenstrom zeitnah an den neuen Zuschauer übertragen kann.

Die Punkt-zu-Punkt-Netzwerkverbindung zwischen dem neuen Zuschauer und dem vermittelten Teilnehmer kann nun dadurch aufgebaut werden, daß der neue Zuschauer nach der Vermittlung eines Teilnehmers, der ihm den Datenstrom zeitnah übertragen kann, eine Verbindungsaufforderung an diesen vermittelten Teilnehmer sendet auf die hin eine Punkt-zu-Punkt-Netzwerkverbindung zwischen den Teilnehmern aufgebaut wird.

Ebenso kann die Vermittlungsinstanz über eine bestehende Punkt-zu-Punkt-Netzwerkverbindung an den vermittelten Teilnehmer eine Aufforderung senden, mit dem neuen Zuschauer eine Punkt-zu-Punkt-Netzwerkverbindung herzustellen. Nachfolgend kann der vermittelte Teilnehmer eine Verbindungsaufforderung an den neuen Zuschauer senden. Diese Vorgehensweise ist insbesondere dann von Vorteil, wenn die Netzwerkkennung des vermittelten Teilnehmer von einem Zugangsrechner verborgen wird. Solche Teilnehmer werden im folgenden NAT (Network Address Translation)-Teilnehmer genannt. Eine Verbindungsaufnahme mit dem NAT-Teilnehmer durch den neuen Zuschauer ist dann nicht möglich. Allerdings kann die Vermittlungsinstanz über die bestehende Verbindung den NAT-Teilnehmer veranlassen, seinerseits eine Verbindung dem neuen Zuschauer zu initiieren.

Insbesondere wird ein NAT-Teilnehmer zweckmäßig nur solchen neuen Zuschauern vermittelt, deren Netzwerkkennung nicht verborgen wird (Nicht-NAT-Teilnehmer).

Als vorteilhaft hat sich herausgestellt, wenn einem Nicht-NAT-Teilnehmer nur dann ein NAT-Teilnehmer vermittelt wird, wenn dem Nicht-NAT-Teilnehmer zumindest ein weiterer Nicht-NAT-Teilnehmer vermittelt ist. Dann kann nämlich bei Ausfall des Nicht-NAT-Teilnehmers der weitere Nicht-NAT-Teilnehmer dessen Rolle übernehmen.

Der Zugang zu einer Übertragung kann auf bestimmte Teilnehmer beschränkt sein. Ein neuer Zuschauer wird in diesem Fall nur dann als Teilnehmer an der Übertragung zugelassen, wenn ihm die entsprechende Sendung offen steht. Zugang kann er beispielsweise durch Eingabe eines Paßwortes oder eines Zugangscodes, eine vorherige Anmeldung oder durch Anmelden von einem Rechner mit bestimmter Netzwerkkennung erhalten.

In einer weiteren bevorzugten Ausgestaltung des Verfahrens meldet der Produzent die Übertragung des Datenstroms vor Beginn bei einer Vermittlungsinstanz an, und die Vermittlungsinstanz kündigt die Übertragung möglichen Zuschauern an, so daß diese über eine Punkt-zu-Punkt-Netzwerkverbindung eine Teilnahmeaufforderung an die Vermittlungsinstanz senden können.

Mit Vorteil führt jeder Teilnehmer an der Übertragung eine kurzfristige Zwischenspeicherung des empfangenen Datenstrom durch. Der Zuschauer sieht/hört dann nicht die gerade empfangen Daten, sondern aus dem Zwischenspeicher entnommene, kurze Zeit zuvor empfangene Daten. Dadurch können über die Software kurze Unterbrechungen des eingehenden Datenstroms für den Zuschauer unbemerkt kompensiert werden.

Insbesondere ist es zweckmäßig, wenn bei Ausfall eines Zuschauers, der einen weiteren Zuschauer mit dem Datenstrom mit einem Zeitversatz Δt versorgt hat, der andere Teilnehmer, der nachfolgend die Versorgung des weiteren Zuschauers übernimmt, den weiteren Zuschauer mit dem Datenstrom mit demselben Zeitversatz Δt versorgt, eventuell unter Rückgriff auf seine zwischengespeicherten Daten. Der Wechsel des versorgenden Zuschauers kann dann für den weiteren Zuschauer unbemerkt geschehen.

Erforderlich ist dafür, daß die kurzfristige Zwischenspeicherung eine Zeitspanne abdeckt, die der maximalen Zeitverzögerung im Übertragungsbaum entspricht. Die genaue maximale Zeitverzögerung hängt natürlich von der Größe des Baums und den Übertragungsstrecken ab. Die typischen maximalen Zeitverzögerungen von bis zu einigen Sekunden können jedoch ohne weiteres zwischengespeichert werden.

Es hat sich als zweckmäßig herausgestellt, wenn die Teilnehmer über die bestehenden Punkt-zu-Punkt-Verbindungen mit der Vermittlungsinstanz Verbindungsdaten an diese übertragen, die Angaben über die Anordnung der Teilnehmer im Übertragungsbaum und/oder aktuelle Übertragungsraten enthalten.

Die Vermittlungsinstanz kann auf Grundlage der übertragenen Verbindungsdaten die Struktur des Übertragungsbaums für möglichst optimale Empfangsqualität der Teilnehmer verbessern, und entsprechende Verbindungsaufnahme-, Verbindungsabbruch- oder Verbindungsänderungsaufforderungen an die Teilnehmer senden.

In einer bevorzugten Ausgestaltung des Übertragungsverfahrens können die Zuschauer über die Punkt-zu-Punkt-Verbindungen Rückmeldungen an den Produzenten oder die Vermittlungsstelle übertragen.

Weitere vorteilhafte Ausgestaltungen, Merkmale und Details der Erfindung ergeben sich aus den abhängigen Ansprüchen, der Beschreibung der Ausführungsbeispiele und den Zeichnungen.

### Kurze Beschreibung der Zeichnungen

Nachfolgend soll die Erfindung anhand von Ausführungsbeispielen im Zusammenhang mit den Zeichnungen näher erläutert werden. Dabei sind nur die für das Verständnis der Erfindung wesentlichen Elemente dargestellt. Es zeigt
- Figur 1: eine schematische Darstellung eines komplexen Sendeformats mit zwei Bewegtbildern, Ton, einem Graphik- und einem Text/Graphik-Fenster;
- Figur 2: eine schematische Darstellung eines mit einer Ausgestaltung des erfindungsgemäßen Verfahrens aufgebauten Übertragungsbaums;
- Figur 3: in a) bis g) die beim Aufbau eines einfachen Übertragungsbaums erfolgenden Schritte;
- Figur 4: in a) und b) die beim Ausfall eines Zuschauers erfolgende Umordnung des Übertragungsbaums von Fig. 3g);
- Figur 5: in a) und b) die beim Ersatz des Produzenten erfolgende Neuordnung der Übertragung beim Übertragungsbaums von Fig. 3g);
- Figur 6: in a) und b) die bei einer Aufteilung einer Sendung auf zwei Produzenten erfolgende Neuordnung der Übertragung beim Übertragungsbaums von Fig. 3g);
- Figur 7: in a) und b) vorteilhafte Anordnungen von NAT-Teilnehmern und Nicht-NAT-Teilnehmern in einem mit einer Ausgestaltung des erfindungsgemäßen Verfahrens aufgebauten Übertragungsbaums;
- Figur 8: eine schematische Darstellung zur Illustration eines UDP-Verbindungsaufbaus zweier NAT-Teilnehmer.

### Wege zur Ausführung der Erfindung

Das erfindungsgemäße Verfahren ermöglicht es einem der Teilnehmer, dem Produzenten einer Sendung, das Stattfinden der Sendung sowie gegebenenfalls weitere Informationen zu Inhalt und Art der Sendung anderen Teilnehmern, den Zuschauern anzukündigen, und die den die Sendung darstellenden Datenstrom über das Datennetz an die Zuschauer zu verteilen.

Eine Sendung besteht dabei aus verschiedenen Multimedia-Daten, wie beispielsweise Bewegtbild, Ton, Graphiken, Texte, Applikationen, etc, oder beliebige andere Daten. Eine Sendung kann beispielsweise wie ein Fernsehprogramm gestaltet sein, also aus Bewegtbild und Ton bestehen, oder aber auch Schulungskomponenten enthalten wie Erläuterungen und somit die Form von Teleteaching, Computer Based Training (CBT) oder Web based Training (WBT) haben. Die verschiedenen Elemente können beliebig am Bildschirm angeordnet werden, insbesondere können Bilder oder andere Bewegtbild-Daten in einem Bewegtbildfenster dargestellt werden.

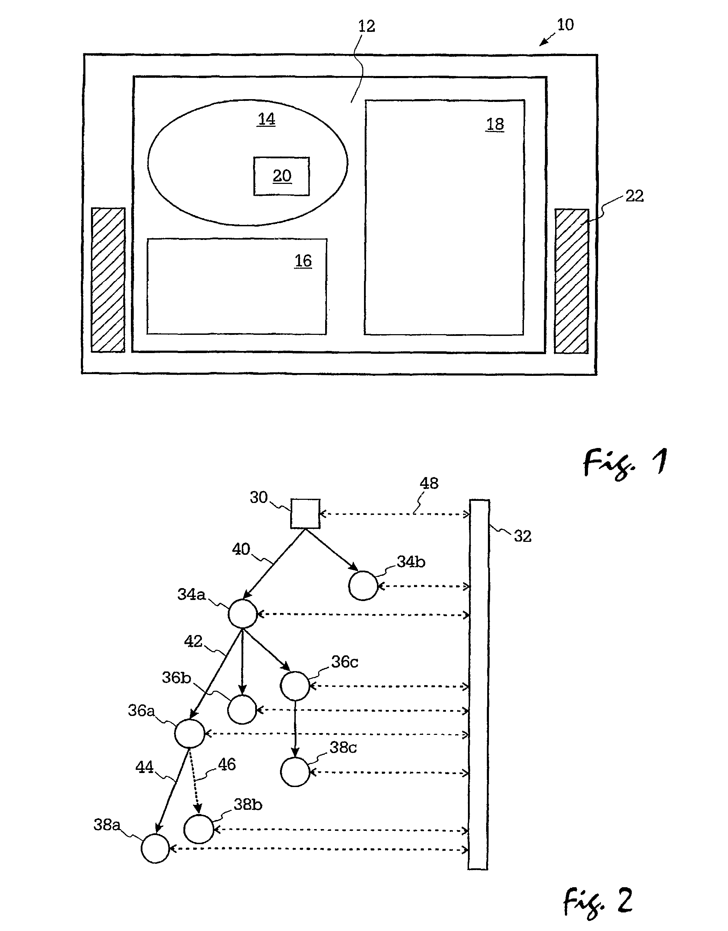

Figur 1 zeigt eine beispielhafte Darstellung eines komplexen Sendeformats, bei der auf der Bildschirmfläche 12 eines Computermonitors 10 ein Bewegtbildfenster 14, ein Graphikfenster 16 und ein Fenster 18 für Text und Graphik angeordnet sind. Innerhalb des Bewegtbildfensters 14 ist zur Bild-im-Bild-Darstellung ein weiteres Bewegtbildfenster 20 angeordnet. Die zugehörigen Tondaten werden über Lautsprecher 22 ausgegeben.

Beispielsweise könnte die zugehörige Sendung einen Vortrag zum Inhalt haben, bei dem der Vortragstext über die Lautsprecher 22 wiedergegeben wird, ein Echtzeitbild des Referenten im Bewegtbildfenster 14 zu sehen ist, Präsentationsfolien im Text/Graphikfenster 18 erscheinen und vom Referenten zur Erläuterung erstellte Skizzen in dem Graphikfenster 16 dargestellt werden. Führt der Referent zusätzlich eine Videoaufnahme vor, oder läßt er ein Programm auf einem Rechner ablaufen, kann das Videobild oder die Ausgabe des Programms in dem Bild-im-Bild-Fenster 20 erscheinen.

Wie das ovale Bewegtbildfenster 14 illustriert, ist die äußere Form der einzelnen Fenster nicht notwendigerweise rechteckig. Ungewöhnliche Formen bieten sich dabei insbesondere für weniger formelle Sendungen an.

In einem Bildfenster können nacheinander auch verschiedene Inhaltstypen dargestellt werden. So kann z.B. dem Echtzeitbild des Referenten im Bewegtbildfenster 14 ein Text mit Informationen zur Sendung vorangestellt sein, der vor der Bewegtbildübertragung angezeigt wird.

Über die genannten Datenformate hinaus können mit einer Sendung jedoch auch jegliche andere Daten übertragen werden, wie beispielsweise Programmdaten, Nutzdaten oder Applikationsdaten.

Auch interaktive Elemente können innerhalb einer Sendung realisiert sein. In textbasierten Diskussionsforen, wie sie etwa sogenannte Chat-Räume darstellen, können die Zuschauer einer Sendung und der Produzent Texte austauschen. Weitere Elementen sind Auswahlmöglichkeiten oder Abstimmungen, die den Zuschauern angeboten werden (beispielsweise über Multiple Choice), oder Rückfragen der Zuschauer an den Produzenten, die insbesondere textbasiert oder mit Tonübertragung realisiert werden können.

Die Gestaltung einer Sendung wird in Sendeformaten festgelegt. Ein Sendeformat ist beispielsweise das Fernsehformat, in dem nur Ton und Bewegtbild übertragen wird. Ein anderes Format ist das Radio-Format, welches nur aus Ton besteht. Ein Format für Schulungen könnte beispielsweise aus Bewegtbild, Ton und zusätzlichen Graphiken und Texten bestehen, wie oben in Zusammenhang mit Fig. 1 dargestellt.

Eine Sendung kann öffentlich sein, das heißt jeder Interessierte kann an der Sendung als Zuschauer teilnehmen. Bei geschlossenen Sendungen kann dagegen der Produzent oder eine andere Instanz festlegen, welche Teilnehmer an der Sendung teilnehmen dürfen und welche nicht.

Die Sendedaten werden vom Produzenten über eine Baumstruktur zeitnah an die Zuschauer übertragen. Dabei bedeutet zeitnah, daß bis auf technisch bedingten zeitlichen Versatz die Sendung von allen Zuschauern zeitgleich empfangen werden kann. Der technisch bedingte zeitliche Versatz hängt von der Tiefe des Übertragungsbaums ab, und beträgt beispielsweise 10 Sekunden.

Zentrale Anlaufstelle für Produzenten und Zuschauer ist die Vermittlungsstelle. Um eine Sendung durchzuführen, meldet der Produzent die Sendung bei der Vermittlungsstelle mit den relevanten Daten an, wie beispielsweise Zeit und Dauer der Sendung, Titel und Inhalt, inhaltliche Klassifizierung nach Kategorien, und dergleichen. Diese Informationen können zusammen mit Namen und weiteren Daten des Produzenten veröffentlicht werden, etwa in einer elektronischen Programmzeitschrift. Sie dienen den möglichen Zuschauern als Orientierung bei der Auswahl der angebotenen Sendungen.

Nach der Registrierung der Sendung erzeugt die Vermittlungsstelle eine Kennung und verschiedene Zugangscodes für diese Sendung. Die Kennung dient zur eindeutigen ldentifikation der Sendung. Ein Zugangscode dient den Teilnehmern beispielsweise als Legitimation, die Sendung anschauen zu dürfen. Bei öffentlichen Sendungen können die Zugangscodes in einer elektronischen Programmzeitschrift veröffentlicht werden, so daß jeder die Sendungen anschauen kann.

Die Vermittlungsstelle kann von einem oder mehreren an einem Ort aufgestellten Rechnern gebildet sein, oder auch von an verschiedenen Orten verteilten Rechnern, die zusammen die Aufgaben der Vermittlungsstelle übernehmen. Insbesondere ist es auch möglich, daß der Produzent selbst die Funktion der Vermittlungsstelle übernimmt.

Die zur Produktion der Sendung benötigte Zusatzsoftware kann der Produzent in Form von Software Module von der Vermittlungsstelle herunterladen oder auf einem Datenträger beziehen und dann lokal auf seinem Computer installieren.

Dazu können verschiedene Techniken aus dem Internet-Umfeld verwendet werden, wie Plugins oder ActiveX Controls. Dabei handelt es sich um Software-Module, die bei Bedarf von einem Web-Server geladen werden. Wird im Internet-Browser eine Seite aufgerufen, die ein Software-Modul enthält, so lädt der Internet-Browser über einen darin enthaltenen Verweis das benötigte Software-Modul vom Server herunter, installiert dieses auf dem Rechner des Zuschauers und führt anschließend die Software aus. Ist das Software-Modul bereits in der aktuellen Version installiert, so wird es nicht mehr heruntergeladen, sondern es wird gleich das bereits installierte Modul ausgeführt.

Die Plugin-Technik wurde dabei ursprünglich von Netscape entwickelt, während die ActiveX Technologie von Microsoft stammt. Gängige Browser wie der Internet Explorer von Microsoft unterstützen beide Arten, also sowohl Plugins wie auch ActiveX Controls. Es können jedoch auch beliebige andere Techniken für ladbare Software-Module verwendet werden, wie Java Applets, oder JavaScript Bibliotheken.

Auch wenn die Verwendung der genannten Web-basierten Software Modul Verteilungsmechanismen das Erlangen der nötigen Software für die Benutzer stark vereinfacht, kommen doch auch allen anderen Mechanismen zur Software Modul Verteilung in Betracht, wie der Versand der benötigten Software auf permanenten Datenträgern wie CD oder Disketten, Versand per Email, getrenntes Herunterladen per Ftp, und dergleichen.

Zur Vorbereitung der Sendung nimmt der Produzent alle notwendigen Einstellungen an der Software vor, wie die Auswahl und Einstellung der Kamera, Auswahl und Einstellung des Mikrofons, Vorbereitung von Graphiken, Beiträge, Festlegung von geschlossenen Benutzergruppen. Diese Einstellungen werden gespeichert und werden im Rahmen der Sendung verwendet.

Der Produzent kann nun die Produktion der Sendung starten. Nach ihrer Anmeldung wird die Sendung kurz vor ihrem Beginn von der Vermittlungsstelle freigeschaltet. Allen interessierten Teilnehmern wird nun mitgeteilt, daß die Sendung freigeschaltet wurde und daß sie die Sendung von nun an empfangen können.

Vor dem eigentlichen Beginn der Sendung kann ein Vorspann gesendet werden, beispielsweise ein Testbild oder eine Werbung.

Der Produzent startet die Sendung, und die Sendung darstellenden Daten werden in Form eines Datenstroms vom Produzenten direkt oder indirekt zu den Zuschauern übertragen, bis der Produzent die Sendung beendet.

Der Produzent einer Sendung kann diese während der Sendung aufzeichnen. Bei einer späteren Sendung kann er dann anstelle einer neuen Sendung die aufgezeichnete Sendung ausstrahlen. Das Sendeverfahren läuft analog dem Senden einer Life-Sendung.

Eine Sendung kann mit Möglichkeiten zur Interaktion ausgestattet sein. Dies können Umfragen sein, bei denen der Produzent den Zuschauern verschiedene Optionen zur Auswahl bietet. Der Zuschauer kann durch unterschiedliche Aktionen, wie das Anklicken einer Kopfes auf dem Bildschirm oder das Eingeben eines Textes eine Option anwählen. Der Produzent bekommt dann eine Rückmeldung über die getätigten Aktionen, beispielsweise die Information, wieviele Zuschauer sich für eine bestimmte Option entschieden haben, oder welche Zuschauer sich für welche der Optionen entschieden haben.

Eine andere Möglichkeit bieten Chat-Räume, in denen die Zuschauer über die Computer-Tastatur untereinander und mit dem Produzenten diskutieren können. Neben freien können auch moderierte Chats verwendet werden, bei denen der Produzent die Aussagen einzelner Zuschauer beeinflussen kann, indem er beispielsweise bestimmte Textteile entfernt.

Alle Interaktionsmöglichkeiten können nur von den Zuschauern der Sendung durchgeführt werden, also von den über die Vermittlungsstelle in die Sendung vermittelten Teilnehmern.

Eine Sendung kann von jedem Teilnehmer, der an der Sendung teilgenommen hat, beurteilt werden. Dazu wird dem Teilnehmer eine vorgefertigte Bewertungsskala angeboten, auf der er die gewünschte Bewertung einträgt. Insbesondere sind Klassifizierungen nach verschiedenen Maßstäben möglich, wie die Rechtmäßigkeit und die moralische Unbedenklichkeit des Inhaltes. Dazu können freie Kommentare über den Inhalt oder die Qualität der Sendungen abgegeben werden. Diese Beurteilungen können in der elektronischen Programmzeitschrift mit dem Produzenten oder dem Namen einer Sendereihe verknüpft werden, so daß sich die Zuschauer bei der Auswahl einer Sendung an den früheren Bewertungen ähnlicher Sendungen oder an früheren Bewertungen anderer Sendungen desselben Produzenten orientieren können.

Ein Teilnehmer an der Sendeübertragung (Produzent oder Zuschauer) benötigt eine marktübliche PC-Ausrüstung, beispielsweise (Stand Mitte 2001) einen PC mit 300 MHz Pentium III Prozessor, sowie einen üblichen Netzwerkanschluß an das verwendete Datennetz, etwa eine 64 kBit/s Verbindung zum Internet. Zur Produktion von Ton- und Bewegtbilddatenströmen ist die entsprechende Ausrüstung nötig, also ein Standard-Mikrophon und eine Standard-PC-Kamera, etwa eine Webcam mit USB-Anschluß, oder eine Digitalvideokamera mit PC-Anschluß.

Ein Teilnehmer kann sich bei der zentralen Vermittlungsstelle mit seinem Namen, seiner Email-Adresse und weiteren persönlichen Daten registrieren lassen.

Einen wesentlichen Zug des erfindungsgemäßen Verfahrens stellt die Tatsache dar, daß jeder am verwendeten Datennetz angeschlossene Teilnehmer, der über die Mindestausrüstung verfügt, ohne weiteres sowohl Produzent als auch Zuschauer einer Sendung sein kann.

Die Vermittlungsstelle ist die zentrale Anlaufstelle sowohl für die Produzenten als auch für die Zuschauer. Die Vermittlungsstelle ist typischerweise web-basiert, das heißt, sie besitzt eine Schnittstelle, die von Produzenten und Zuschauern mit Hilfe eines Standard-Internet-Browser bedient werden kann. Als relevante Standards sind insbesondere HTML als Seitenbeschreibungssprache, http als Übertragungsprotokoll und TCP/IP als Netzwerktechnik zu nennen. Zusätzlich werden Software-Module zur Multimedia-Darstellung verwendet, welche ebenso wie die Software-Module der Produzententechnik als Plugin, ActiveX, oder auf eine beliebige, andere Art geladen werden können.

Zuschauer, die an einer Sendung teilnehmen wollen, erhalten von der Vermittlungsstelle nach der Übermittlung ihres Teilnahmewunsches alle dazu benötigten Informationen und Software-Module. Es werden dazu zunächst verschiedene Eigenschaften des Teilnehmerrechners ermittelt, wie seine Rechenleistung, die Qualität und Leistung der Netzwerkanbindung und dergleichen. Anschließend werden diese Daten an die Vermittlungsstelle übermittelt.

Aufgrund dieser Daten wird von der Vermittlungsstelle eine geeignete Position für den Teilnehmer in der Baumstruktur der Sendung berechnet, wie weiter unten im Detail beschrieben.

Alle für die Teilnahme relevanten Informationen, wie die Kennung der Sendung, Position und Auszüge aus der Baumstruktur, werden von der Vermittlungsstelle an den Teilnehmer übermittelt. Mit diesen Informationen baut der Teilnehmer eine Punkt-zu-Punkt Netzwerkverbindung zum Produzenten oder einem anderen Teilnehmer an der Übertragung auf. Über diese Verbindung wird dann der Teilnehmer als neuer Zuschauer mit dem Datenstrom der Sendung versorgt.

Die Daten werden von der Vermittlungsstelle entsprechend aufbereitet, beispielsweise signiert, so daß die auf den Teilnehmerrechnern installierte Software die Authentizität der Vermittlungsstelle überprüfen kann. Auch werden weitere Maßnahmen ergriffen, die eine Teilnahme ohne Verwendung der Vermittlungsstelle ausschließen, wie etwa ein Zeitstempel zur Verhinderung eines sogenannten Replay-Attacks, bei dem alte Verbindungsdaten abgefangen und mehrfach verwendet werden.

Die Vermittlungsstelle erhält von den Teilnehmern laufend Informationen über die aktuelle Netzwerkstruktur und deren Eigenschaften, beispielsweise die Qualität der verschiedenen Verbindungen der Teilnehmer untereinander. Diese Informationen geben der Vermittlungsstelle ein Bild über die gegenwärtige Baumstruktur der Sendung und versetzen diese in die Lage, Verbesserungen zu erkennen und durchzuführen. Dazu kann die Vermittlungsstelle einzelne Teilnehmer in der Sendung ansprechen und so Änderungen an der Baumstruktur veranlassen.
Die Vermittlungsstelle kann einzelne Teilnehmer aus der Sendung entfernen oder die gesamte Sendung unterbrechen bzw. beenden. Die Vermittlungsstelle kann für jede Sendung eine Abrechnung über relevante Informationen vornehmen, wie Anzahl und Dauer der Teilnehmer, explizite Auflistung aller Teilnehmer, und dergleichen. Diese Informationen können dem Produzenten oder anderen Interessenten zur Verfügung gestellt werden.

Ein Zuschauer kann an einer vom Produzenten registrierten Sendung anhand einer Sendekennung teilnehmen, die er beispielsweise aus der Programmzeitschrift auswählt, oder die er anderweitig mitgeteilt bekommt, etwa vom Produzenten selbst oder von der Vermittlungsstelle, beispielsweise per Email. Nachdem die Sendung freigeschalten wurde, kann sich der Zuschauer von der Vermittlungsstelle in die Sendung hineinvermitteln lassen. Dazu aktiviert er die entsprechende Zugangskennung, etwa durch einen Klick auf einen Hyperlink, und die benötigte Software wird gestartet. Bei der ersten Benutzung oder bei Änderungen an der Software oder der Konfiguration wird die Software zunächst installiert und dann gestartet gemäß dem verwendeten Software-Modul-Verfahren, also etwa dem Plugin- oder ActiveX-Verfahren.

Der Produzent kann festlegen, ob eine Sendung von jedem Teilnehmer oder nur von einer bestimmten, geschlossenen Benutzergruppe empfangen werden darf. Dazu kann der Produzent zunächst bei der Vermittlungsstelle eine Benutzergruppe einrichten. Die Teilnehmer müssen dann bei der Vermittlungsstelle registriert sein und eine eindeutige Kennung besitzen. Mittels dieser Kennung kann der Produzent oder eine sonstige berechtigte Stelle einzelne Benutzer in eine geschlossene Benutzergruppe aufnehmen.

Im Rahmen der Ankündigung einer Sendung kann der Produzent festlegen, für welche Benutzergruppen die Sendung zugänglich gemacht werden soll. Ist die Sendung nur für eine oder mehrere geschlossene Benutzergruppen zugänglich, so werden nur erlaubte Teilnehmer in eine Sendung vermittelt. Kann die Identität des Teilnehmers nicht festgestellt werden oder besitzt der Teilnehmer nicht die benötigte Berechtigung, so wird der Verbindungswunsch von der Vermittlungsstelle abgelehnt.

Figur 2 illustriert die Baumstruktur einer Sendung mit acht Zuschauern. Der Produzent 30 hat Übertragungskapazität für zwei Zuschauer 34a, 34b, denen er den Datenstrom über Punkt-zu-Punkt-Netzwerkverbindungen 40 übermittelt. Der Zuschauer 34a selbst versorgt drei weitere Zuschauer 36a-c mit dem Datenstrom.

Dabei entsteht durch den Empfang und die Weiterleitung des Datenstroms durch den Zuschauer 34a eine kleine Zeitverzögerung von einigen 10 bis 100 Millisekunden, so daß die Zuschauer 36a-c die Sendung im Vergleich zu den Zuschauern 34a-b zeitverzögert empfangen. Eine ähnliche Zeitverzögerung entsteht durch jede folgende Weiterleitung, so daß Zuschauer, die in der Baumstruktur viele Knoten entfernt vom Produzenten angeordnet sind, die Sendung mit einer größeren Zeitverzögerung von bis zu einigen Sekunden empfangen. Diese Zeitverzögerung muß bei Interaktionen oder Umordnungen der Baumstruktur berücksichtigt werden.

Der Zuschauer 36a versorgt über Netzwerkverbindungen 44, 46 wiederum zwei weitere Zuschauer 38a,b mit dem Datenstrom der Sendung. Der Zuschauer 38b besitzt aufgrund seiner technischen Ausstattung (etwa ein langsameres Modem) nur eine eingeschränkte Empfangsbandbreite und wird daher mit einer reduzierten Version 46 des Datenstroms versorgt.

Da diese eingeschränkte Empfangsbandbreite bei der Kontaktaufnahme des Zuschauers 38a mit dem Zuschauer 36a bekannt gegeben wurde, kann ihr der Zuschauer 36a Rechnung tragen, indem beispielsweise die Framezahl einer Bewegtbildübertragung für den Zuschauer 38a verringert wird.

Auch nach ihrer erfolgreichen Vermittlung in die Sendung tauschen die Vermittlungsstelle 32 und die Teilnehmer Verbindungsdaten 48 aus, die etwa die Qualität der verschiedenen Verbindungen der Teilnehmer und die Baumstruktur betreffen, so daß die Vermittlungsstelle 32 bei Bedarf die Baumstruktur optimieren oder sonst verändern kann.

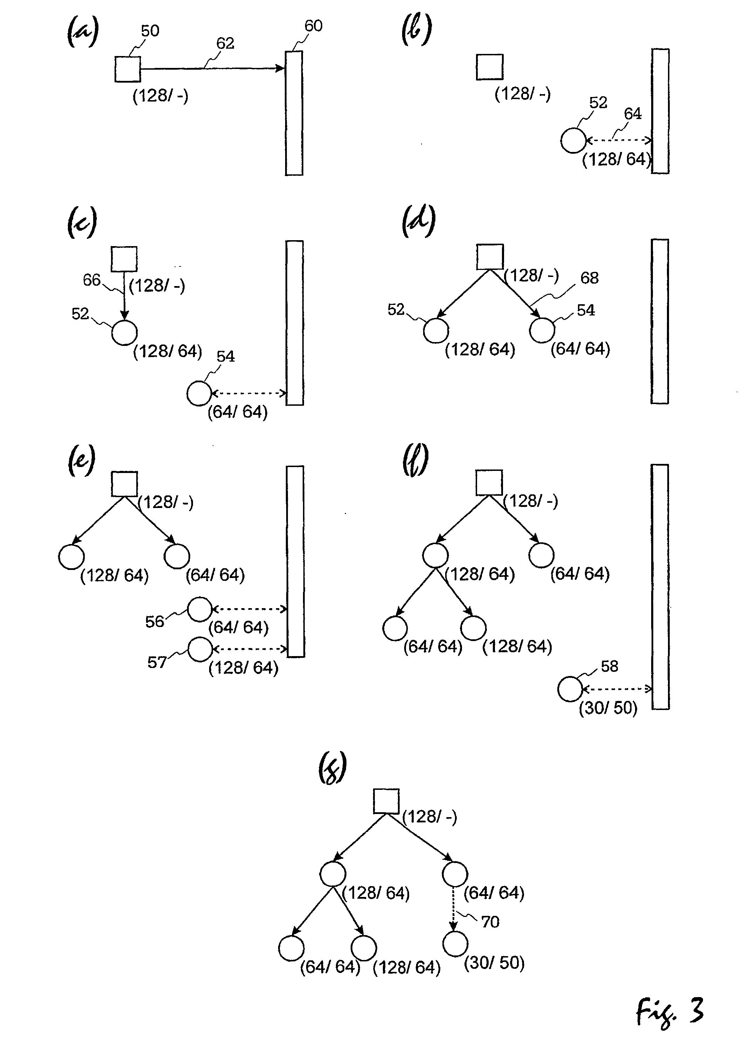

Der Aufbau eines Übertragungsbaumes ist beispielhaft in Fig. 3 illustriert. Der Produzent 50 einer Sendung meldet die Sendung zunächst bei der Vermittlungsstelle 60 an, indem er Informationen 62 über Beginn, Dauer, Art und Inhalt der Sendung über das Datennetz der Vermittlungsstelle 60 mitteilt (Fig. 3a). Im Ausführungsbeispiel teilt der Produzent 50 auch mit, daß er über eine Netzwerkanbindung mit einer Sendebandbreite von 128 kBit/s verfügt. Zugleich wird angenommen, daß die Sendung bei einer Bandbreite von 64 kBit/s in voller Qualität übertragen werden kann. Der Produzent 50 kann somit mit seiner Sendebandbreite zwei Empfänger mit dem Datenstrom versorgen.

Nach Ankündigung der Sendung in einer elektronischen Programmzeitschrift durch die Vermittlungsstelle meldet sich ein erster Zuschauer 52 mit einer Sendebandbreite von 128 kBit/s und einer Empfangsbandbreite von 64 kBit/s mit einem Teilnahmewunsch bei der Vermittlungsstelle 60 (Fig. 3b). Sende- und Empfangsbandbreite des Zuschauers 52 wird in Fig. 3 kurz mit (128/64) angegeben.

Als Antwort teilt die Vermittlungsstelle 60 dem Zuschauer 52 über die Netzwerkverbindung 64 die notwendigen Verbindungsdaten, insbesondere die Netzwerkkennung des Produzenten 50 mit.

Zwischen dem Zuschauer 52 und dem Produzenten 50 wird nun in dem Datennetz eine Punkt-zu-Punkt-Netzwerkverbindung 66 aufgebaut, über die der Produzent 50 den Zuschauer 52 mit dem Datenstrom der Sendung versorgt (Fig. 3c).

Ein zweiter Zuschauer 54 mit einer Sende- und Empfangsbandbreite von 64 kBit/s (kurz: (64/64)) wird von der Vermittlungsstelle 60 ebenfalls an den Produzenten 50 vermittelt (Fig. 3d). Auch zwischen dem Zuschauer 54 und dem Produzenten 50 wird eine Punkt-zu-Punkt-Netzwerkverbindung 68 aufgebaut, über die der zweite Zuschauer 54 mit dem Datenstrom der Sendung versorgt wird.

Die Sendekapazität des Produzenten 50 ist mit der Versorgung der beiden Zuschauer 52, 54 nunmehr ausgelastet. Die nächsten Zuschauer 56, 57, die einen Teilnahmewunsch an die Vermittlungsstelle 60 richten (Fig. 3e), können daher nicht mehr an den Produzenten 50 vermittelt werden. Im Ausführungsbeispiel werden beide Zuschauer an den Zuschauer 52 vermittelt, der mit 128 kBit/s ausreichend Sendebandbreite für zwei Empfänger hat (Fig. 3f).

Die Vermittlung der Zuschauer 56, 57 an den Zuschauer 52 kann dadurch geschehen, daß die Vermittlungsstelle über Informationen über die Sende-/Empfangsbandbreiten aller Teilnehmer verfügt und neue Zuschauer entsprechend der noch freien Kapazitäten vermittelt. Alternativ kann die Vermittlungsstelle einem neuen Teilnehmer auch lediglich die Kennung eines oder mehrerer Teilnehmer an der Übertragung nennen. Der neue Teilnehmer richtet dann einen Übertragungswunsch an einen der genannten Teilnehmer. Kann dieser Teilnehmer den Datenstrom an den neuen Teilnehmer übertragen, so übernimmt er diese Rolle. Andernfalls lehnt er ab und nennt dem neuen Teilnehmer ihm bekannte weitere Teilnehmer an der Übertragung, an die dieser seinen Übertragungswunsch richten kann.

Nach erfolgreicher Vermittlung erhält der neue Teilnehmer nicht nur Information über seinen Vater im Übertragungsbaum, also den Teilnehmer, der ihn mit dem Datenstrom versorgt, sondern auch über seinen Großvater, also den Teilnehmer, der seinen Vater mit dem Datenstrom versorgt. Allgemein erhält jeder Teilnehmer Informationen über sein lokales Umfeld im Übertragungsbaum. Dadurch können begrenzte Umordnungen des Baums bei Ausfall eines Teilnehmers von den betroffenen Teilnehmern im lokalen Umfeld ohne Umweg über die Vermittlungsstelle und damit schneller vorgenommen werden. Nach einer Umordnung wird die Vermittlungsstelle über die vorgenommenen Änderungen benachrichtigt, damit diese die aktuelle Baumstruktur verfolgen und bei Bedarf weiter verändern kann.

Der nächste Zuschauer 58 mit einer einschränkten Sende- (30 kBit/s) und Empfangsbandbreite (50 kBit/s) wird über die Vermittlungsstelle 60 an den Zuschauer 54 vermittelt. Die auf dem PC des Zuschauers 54 installierte Software reduziert vor der Weiterleitung den Datenstrom der Sendung auf die Übertragungsrate von 50 kBit/s (Bezugszeichen 70), da der Zuschauer 58 eine höhere Rate nicht verarbeiten kann (Fig. 3g). Um eine optimale Empfangsqualität für die Zuschauer zu erreichen, wird einem Zuschauer mit einer reduzierten Sendebandbreite nach Möglichkeit kein Zuschauer mit einer höheren Empfangsbandbreite vermittelt.

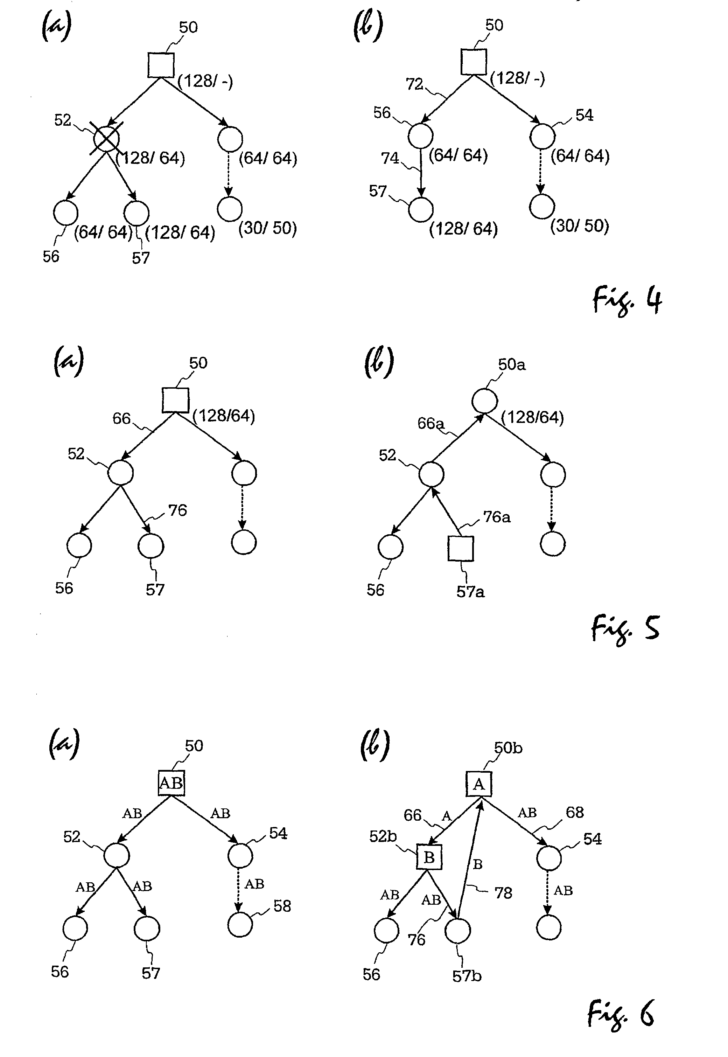

Figur 4 illustriert die Aktionen nach Ausfall oder Ausstieg eines Teilnehmers im Übertragungsbaum. Der Zuschauer 52 beendet in Fig. 4a seine Teilnahme an der Übertragung. Dies kann sowohl kontrolliert geschehen, indem der Zuschauer sich von der Sendung abmeldet, als auch unvermittelt, etwa durch Ausschalten des Teilnehmerrechners oder einem Abbruch der Netzwerkverbindung. In beiden Fällen ist es für eine störungsfreie Übertragung der Sendung an die anderen Teilnehmer wichtig, daß die Neuordnung des Übertragungsbaums möglichst rasch und für die restlichen Teilnehmer unbemerkt geschieht.

Um unvermeidliche Verzögerungen bei der Neuordnung aufzufangen, werden die empfangen Daten bei jedem Teilnehmer durch die installierte Software für eine gewisse Zeitspanne gepuffert, bevor sie zur Anzeige gelangen. Dadurch kann eine Verzögerung bei der Neuordnung für die Teilnehmer durch Abspielen bereits gespeicherter Daten unbemerkt bleiben, solange die Verzögerung innerhalb der gepufferte Zeitspanne bleibt.

Zudem kann der Zeitversatz für jeden einzelnen Teilnehmer so gewählt werden, daß die Sendung für alle Teilnehmer zeitgleich angezeigt wird. Sie wird dabei natürlich bezogen auf den Produzenten mit einem gewissen, jedoch für alle Zuschauer gleichen Zeitversatz angezeigt. Da zwischen den Zuschauern kein Zeitversatz besteht, erlaubt diese Variante besonders einfache Neu- oder Umordnungen des Übertragungsbaums.

Kennen die Zuschauer 56, 57, wie oben beschrieben, neben ihrem Vater 52 auch ihren Großvater im Übertragungsbaum, hier den Produzenten 50, können sie den Ausfall ihres Vaters 52 auch ohne Umweg über die Vermittlungsstelle 60 kompensieren. Beide Zuschauer 56, 57 richten einen Übertragungswunsch an ihren Großvater 50. Durch den Ausfall des Zuschauers 52 hat dieser Sendekapazität für einen weiteren Zuschauer zur Verfügung. Die Neuordnung kann dann etwa dadurch geschehen, daß zwischen Zuschauer 56 und Produzenten 50 eine Verbindung 72, und zwischen Zuschauer 57 und Zuschauer 56 eine Verbindung 74 aufgebaut wird, über die der Datenstrom vom Produzenten 50 über den Zuschauer 56 zum Zuschauer 57 übermittelt wird (Fig. 4b).

Dabei wird auch berücksichtigt, daß der Zuschauer 56 nun im Übertragungsbaum weiter nach oben rückt. Erhielt er beispielsweise vorher den Datenstrom vom Zuschauer 52 mit einem Zeitversatz von 500 ms, so würde er ihn nunmehr vom Produzenten 50 direkt, also ohne Zeitversatz erhalten. Dies wird bei dem Verbindungsaufbau zwischen Produzent 50 und Zuschauer 56 dadurch berücksichtigt, daß der Produzent 50 dem Zuschauer 56 mit Daten aus seinem Puffer versorgt, die zeitlich gerade 500 ms gegenüber dem aktuellen Datenstrom versetzt sind. Somit läuft die Übertragung für den Zuschauer 56 trotz Umordnung ohne Störung weiter.

Weiterhin ist möglich, daß bei bestehender Sendung und bestehendem Übertragungsbaum der Produzent wechselt, oder durch einen weiteren Produzenten ergänzt wird, der einen Teil der Sendung übernimmt.

Ein einfacher Fall eines Produzentenwechsels ist in Fig. 5 dargestellt. Die Ausgangssituation von Fig. 5a entspricht der in Fig. 3 am Ende dargestellten Lage. Möchte nun der Produzent 50 die Übertragung abgeben, so melden sich nach entsprechender Nachricht potentielle neue Produzenten beim Produzenten 50. Diese hat in dem beschriebenen Ausführungsbeispiel eine Empfangskapazität von 64 kBit/s, die Sende- bzw. Empfangskapazitäten der restlichen Teilnehmer sind wie in Fig. 3g gezeigt. Der Produzent 50 wählt nun einen der Teilnehmer als Nachfolger aus, im Ausführungsbeispiels den Teilnehmer 57.

Unter Bezugnahme auf Fig. 5b wird nunmehr der Teilnehmer 57 zum neuen Produzenten 57a. Die Übertragungsrichtung für die Punkt-zu-Punkt-Verbindungen 76a und 66a wird gegenüber der vorigen Situation bis zum früheren Produzenten und jetzigen Zuschauer 50a hin umgekehrt. Die vom Zuschauer 50a in den rechten Teil des Übertragungsbaums führenden Verbindungen müssen nicht verändert werden. Allerdings wird wegen der geänderten Positionen im Baum der Zeitversatz einzelner Teilnehmer zum neuen Produzenten 57a in der Regel vom Zeitversatz zum früheren Produzenten 50 abweichen. Dies kann bei der Umkehr der Übertragungsrichtungen, die ebenfalls eine Umordnung des Baums darstellen, analog zu der im Zusammenhang mit Fig. 4 beschriebenen Situation berücksichtigt werden.

Figur 6 zeigt beispielhaft den Fall, daß ein Produzent 50 nur einen Teil der Übertragung an einen anderen Teilnehmer abgibt. In der Ausgangssituation von Fig. 6a, die wiederum der Situation am Ende von Fig. 3 entspricht, produziert der Produzent eine aus zwei Teilen, A und B, bestehende Übertragung. Die Teile A und B können dabei beispielsweise für Bild und Ton einer Sendung stehen. Zunächst, in der Situation von Fig. 6a, überträgt der Produzent 50 beide Teile AB zusammen an die Zuschauer 52, 54, welche sie an weitere Zuschauer 56, 57, 58 übertragen.

Nun kann einer der Teilnehmer einen Teil der Übertragung übernehmen. Im Ausführungsbeispiel übernimmt der Zuschauer 52 die Produktion und Übertragung des Tons B und wird somit selbst zum Coproduzenten 52b. Der Produzent 50b produziert und überträgt nur noch den Bildanteil A des Datenstroms.

Im dem Fall, daß der Coproduzent 52b genügt Sendebandbreite hat, kann er seinen Anteil B an der Übertragung an den Produzenten 50b übertragen. Dieser setzt die Anteile zusammen und überträgt beide Teile AB in oben beschriebener Weise.

Falls jedoch, wie im Ausführungsbeispiel von Fig. 6, der Coproduzent 52b keine freie Sendekapazität hat, kann wie folgt verfahren werden: Er überträgt seinen Anteil B zusammen mit dem vom Produzenten 50b erhaltenen Anteil A entlang des Übertragungsbaums weiter bis zu einem Teilnehmer 57b mit ausreichender freier Sendekapazität. Zwischen dem Teilnehmer 57b und dem Produzenten 50b wird eine neue Punkt-zu-Punkt-Verbindung 78 aufgebaut, über die der Teilnehmer 57b den Produzenten mit dem Sendeanteil B versorgt. Der Produzent 50b selbst überträgt an den Teilnehmer 52b nur den Sendeanteil A, an den anderen Teilnehmer 54 jedoch die gesamte Sendung AB. Insgesamt wird so jeder Teilnehmer mit beiden Teilen der Sendung versorgt. Selbstverständlich muß in der Regel beim Zusammensetzen der Teilsendungen A, B der auftretende Zeitversatz berücksichtigt werden, falls eine genaue Synchronisation der beiden Teile aufgrund der Art der Sendung notwendig ist, etwa bei zusammengehörigem Bild und Ton.

Die bei Fig. 5 und 6 beschriebenen Umordnungen können ohne Kontaktaufnahme zur Vermittlungsstelle durchgeführt werden. Es ist jedoch zweckmäßig, wenn diese zumindest nachträglich über die Änderungen informiert wird.

### Übertragungsverfahren und Vermittlungstechnik

Alle Daten werden über das Netzwerk vom Produzenten an viele Zuschauer übertragen. In nicht-multicast-fähigen Netzwerken, wie es das Internet darstellt, können die Daten mit herkömmlicher Technik nur mit hohem technischen Aufwand an viele Zuschauer übertragen werden. Typischerweise sind jedoch Punkt-zu-Punkt Verbindungen zwischen einzelnen Teilnehmern im Netz einfach möglich, wie sie in IP-basierten Netzen etwa durch TCP/IP oder durch UDP/IP realisiert werden. In dem hier beschriebenen Verfahren werden diese Punkt-zu-Punkt Verbindungen beispielsweise wie folgt genutzt:

Die Daten werden vom Produzenten direkt zu einem oder so vielen Zuschauern übertragen, wie der Produzent versorgen kann. Interessieren sich mehr Zuschauer für eine Sendung als aufgrund der eingeschränkten Bandbreite direkt vom Produzenten versorgt werden können, werden diese nicht vom Produzenten direkt versorgt, sondern von anderen Zuschauern, die bereits mit den Daten versorgt werden und die in Upload-Richtung noch ausreichend Bandbreite zur Verfügung haben. Insbesondere ist dieses Verfahren auch dann anwendbar, wenn der Produzent selbst nur einen einzigen Zuschauer versorgen kann.

Es entsteht für die Übertragung eine Baumstruktur, bei der Produzenten die Wurzel des Baumes und die Zuschauer die Knoten des Baumes darstellen. Die Verbindungen zwischen den Knoten entsprechen den Punkt-zu-Punkt Netzwerkverbindungen zwischen einzelnen Teilnehmern.

Über die Verbindungen werden nicht nur die Nutzdaten ausgetauscht, sondern auch Verbindungsdaten. Dadurch kennen die einzelnen Knoten Teile des gesamten Baumes. Knoten mit freier Upload-Kapazität übertragen in freien Abständen diese Informationen an die Vermittlungsstelle, der somit die einzelnen Knoten des Baumes und ihre Verbindungen bekannt sind. Zudem werden Informationen, welche die Qualität der einzelnen Verbindungen betreffen, mit übertragen. Aufgrund dieser Informationen kann die Vermittlungsstelle neue Teilnehmer geeignet in den Baum anordnen. Zudem kann der Vermittlungsstelle oder einzelne Knoten eine Änderung des Baumes bewirken, um einzelne Verbindungen zu verbessern und somit die Gesamtübertragungsraten im Baum zu optimieren.

Über die bestehenden Verbindungen werden neben den Nutzdaten, auch Verbindungsdaten übertragen. Diese Verbindungsdaten enthalten Informationen, die zur Aufrechterhaltung und Optimierung der Baumstruktur nötig sind, wie Informationen über die Anordnung der Teilnehmer im Baum, aktuelle Übertragungsraten und dergleichen.

Die Verbindungsdaten werden bidirektional übertragen. In geringem Maße können auch interaktive Daten auf diesem Wege übertragen werden. Beispielsweise können die Abstimmungsergebnisse einer Umfrage so von allen Zuschauern an den Produzenten übertragen werden.

Alternativ können interaktive Daten, die eine größere Bandbreite erfordern, wie etwa Tondaten, direkt vom einzelnen Teilnehmer zum Produzenten übertragen werden.

Eine weitere Möglichkeit besteht darin, daß der gesamte Datenstrom oder Teile davon von einem neuen Produzenten erzeugt werden. So kann z.B. ein Teilnehmer kurzzeitig der Produzent für den Ton werden, indem er beispielsweise eine Zwischenfrage stellt. Besitzt dieser Teilnehmer keine ausreichende Sendekapazität mehr, so wird ein Teil des Originaldatenstromes durch den neuen Datenstrom ersetzt, z.B. wird der Originalton durch den neuen Ton ersetzt. Von dort wird der geänderte Datenstrom weitergeleitet, bis ein Teilnehmer mit ausreichender Sendekapazität gefunden ist, welcher den neuen Datenstrom an den ursprünglichen Produzenten weiterleitet.

Über die Baumstruktur werden die Daten an alle Teilnehmer zeitnah verteilt. Reicht dabei die Übertragungskapazität zwischen zwei Teilnehmern nicht für die Übertragung aller Daten aus, so wird wie folgt verfahren:

Multimedia-Datenströme bestehen aus verschiedenen Datenteilströmen, wie etwa einem Bewegtbilddatenstrom, einem Tondatenstrom und einem Graphikdatenstrom. Zum Teil können diese Datenströme reduziert werden, wenn auch nicht immer verlustfrei (Kompression), sondern verlustbehaftet (Reduktion). Dies bedeutet, daß die Multimedia-Daten so geändert werden, daß sie bei im wesentlichen gleichem Inhalt auch mit geringerer Bandbreite übertragen werden können.

Typischerweise ist dies nur durch Inkaufnahme einer schlechteren Qualität (beispielsweise weniger Rahmenbilder pro Sekunde bei Bewegtbild, stärkeres Rauschen oder geringerer Dynamikumfang bei Tondaten) möglich. So kann beispielsweise ein Bewegtbilddatenstrom reduziert werden, indem weniger Rahmenbilder übertragen werden als ursprünglich vom Produzenten aufgenommen.

Im Verfahren des beschriebenen Ausführungsbeispiels wird nun bei den einzelnen Knoten bei Bedarf eine verlustbehaftete Reduktion des Multimedia-Datenstromes oder von Teilen davon derart vorgenommen, so daß die vorhandene Übertragungskapazität für eine Datenübertragung ausreichend ist, wenn auch mit Qualitätseinbußen.

Durch den geeigneten Aufbau oder eine geeignete Umstrukturierung der Baumstruktur kann erreicht werden, daß trotz einzelner Qualitätsverluste aufgrund eingeschränkter Übertragungskapazitäten für jeden Teilnehmer die möglichst optimale Qualität erreicht wird.

Die Teilnehmer werden in der Baumstruktur so angeordnet, daß möglichst viele Teilnehmer mit möglichst hoher Übertragungsqualität versorgt werden können. Dies kann dadurch erreicht werden, daß jeder Teilnehmer mit hoher verfügbarer Sendebandbreite mehrere Zuschauer mit Daten versorgt. Ein Ordnungskriterium sind dabei die maximalen Bandbreiten und die Qualität des Netzwerkanschlusses der einzelnen Teilnehmer. In IP-basierten Netzen kann die IP-Nummer herangezogen werden, um optimale Verbindungen zwischen den Teilnehmern zu erkennen.

Ein anderes Ordnungskriterium ist die Anzahl der Zwischenstationen (Hops), die die Daten auf dem Weg durch ein Netzwerk nehmen: In Datennetzen können teilweise die Wege ermittelt werden, die die Daten zwischen zwei Punkten nehmen. Dies kann z.B. mit einem traceroute-Verfahren durchgeführt werden, welches die IP-Netzknotenpunkte (Router) ermittelt, die auf dem Datenweg liegen. Mit diesen Informationen kann z.B. die Gesamtanzahl der benötigen Hops für alle Teilnehmer in der Baumstruktur verbessert, das heißt verkleinert werden.

Insgesamt wird so aus allen möglichen Verbindungen ein optimaler beziehungsweise mindestens ein gut geeigneter Übertragungsbaum konstruiert.

### NAT-Teilnehmer und Nicht-NAT-Teilnehmer

In großen TCP/IP-basierten Netzen, wie es das Internet darstellt, haben viele Teilnehmer keinen direkten Zugang zum Datennetz, sondern der Zugang ist über Zugangsrechner, sogenannte NAT-Router realisiert, welche die IP-Nummer der Teilnehmer nach außen verbergen. Zu einem solchen Teilnehmer kann von außen keine TCP/IP oder UDP/IP Verbindung aufgebaut werden. Sie können jedoch selbst Verbindungen zu anderen Teilnehmem ohne NAT aufbauen.

Damit auch NAT-Teilnehmer an dem beschriebenen Übertragungsverfahren teilnehmen können, kann folgendes Vorgehen angewandt werden: Jeder Teilnehmer (Produzent oder Zuschauer) nimmt zunächst gemäß den Internet-Standards (TCP/IP, http, HTML) Kontakt mit dem Vermittlungsstelle auf. Diese Kontaktaufnahme ist vom Teilnehmer selbst initiiert und kann unabhängig von NAT durchgeführt werden. Als Antwort werden dem Teilnehmer alle relevanten Verbindungsdaten vom Vermittlungsstelle mitgeteilt. Mit diesen Daten kann nun der Teilnehmer am Übertragungsbaum teilnehmen.

Ist der Teilnehmer im Baum integriert, so können dem Teilnehmer jederzeit Daten im Rahmen der bestehenden Verbindungen übermittelt werden. Wird eine bestehende Verbindung abgebrochen, so wendet sich der Teilnehmer sofort wieder an den Vermittlungsstelle und erhält, wie bei der ersten Kontaktaufnahme, neue Verbindungsdaten übermittelt.

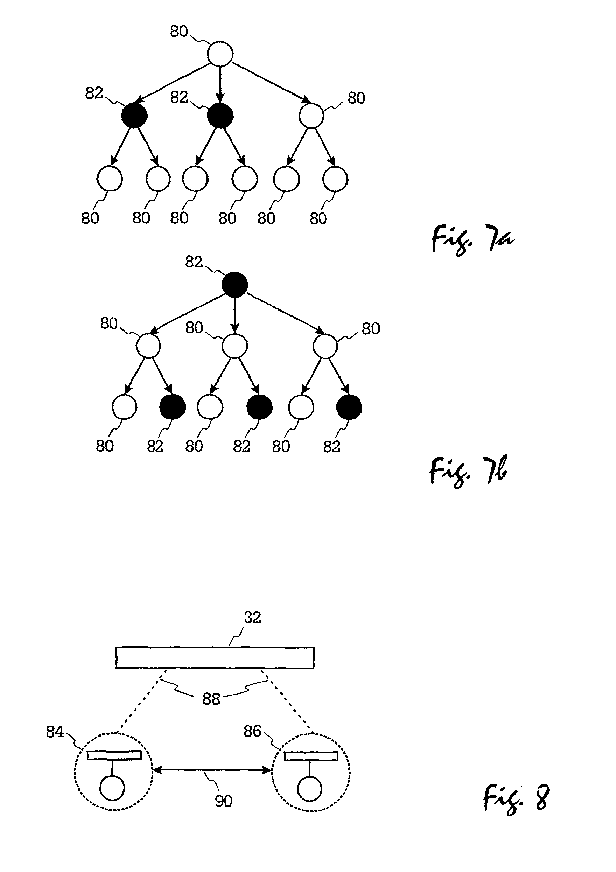

Es wird beim Aufbau des Baumes darauf geachtet, daß die untergeordneten Knoten eines NAT-Teilnehmers 82 alle Nicht-NAT-Teilnehmer 80 sind, da bei einer Punkt-zu-Punkt-Verbindung die Kontaktaufnahme zu zumindest einem der beiden Endpunkte möglich sein muß (Fig. 7a).

Zudem ist es sinnvoll, daß sich unter den untergeordneten Knoten eines Nicht-NAT Knotens 80 immer mindestens ein Nicht-NAT Teilnehmer 80 befindet, der bei Ausfall des übergeordneten Knotens 80 dessen Rolle einnehmen kann. Andernfalls wird eine größere Umordnung des Übertragungsbaums mit entsprechend höherem Zeitbedarf notwendig (Fig. 7b).

Weiterhin besteht die Möglichkeit, auch zwischen zwei Teilnehmern 84, 86 mit Standard-NAT-Routern eine UDP-Verbindung zu schaffen. Ein Standard-NAT-Router verbindet ein äußeres Datennetz (WAN, Wide Area Network), beispielsweise das Internet, mit einem inneren Datennetz (LAN, Local Area Network). Teilnehmer in dem inneren Netz bauen keine direkte Verbindung zu äußeren Teilnehmern auf, sondern der NAT-Router übersetzt diese Verbindungen zwischen LAN und WAN.

Einem WAN-Teilnehmer ist dabei nur die IP-Nummer des NAT-Routers bekannt, nicht jedoch die IP-Nummern der LAN-Teilnehmer. Eine UDP/IP Verbindung von zwei Teilnehmern 84, 86, die in unterschiedlichen Netzwerken jeweils durch einen NAT-Router verbunden sind, kann nun wie folgt realisiert werden:

Wie in Fig. 8 illustriert, bauen zunächst beide Teilnehmer 84, 86 eine UDP-Verbindung 88 zur Vermittlungsstelle 32 auf. Dabei wird in den NAT-Routern eine Tabelle erzeugt, welche jeweils die Verbindung zwischen der LAN-Seite und der WAN-Seite übersetzt. Dies geschieht durch Verwendung von Port-Nummern: jede Verbindung erhält auf der WAN-Seite eine neue Port-Nummer, anhand derer die UDP-Pakete zugeordnet werden können.

Der Vermittlungsstelle 32 analysiert nun die von beiden Teilnehmern erhaltenen UDP-Pakete und ermittelt aus den UDP- und IP-Kopfinformationen (header data) die relevante Informationen, wie beispielsweise die Quell- und Zieladresse (source address, destination address) und die Quell- und Zielportnummern (source port, destination port). Diese Informationen werden nun an beide Teilnehmern rückübermittelt. Mit diesen Informationen erzeugen beide Teilnehmer spezielle UDP-Pakete 90, indem sie insbesondere die Portnummer benutzen, die beim Verbindungsaufbau zwischen dem jeweilig anderen Teilnehmer und der Vermittlungsstelle verwendet wurden.

Diese UDP-Pakete 90 werden nun von den NAT-Routern an die jeweiligen LAN-Teilnehmer weitergeleitet, und beide Teilnehmer 84, 86 können von nun an Daten über diese Verbindung austauschen.

Ebenso kann, allerdings bei höherem Aufwand eine TCP/IP-Verbindung zwischen den NAT-Teilnehmern hergestellt werden.

### Kompensation des Zeitversatzes durch Zwischenspeicherung der Daten

Bei jedem Knoten entsteht eine zeitliche Verzögerung bei der Weiterleitung der Datenpakete. Dies hat zur Folge, daß von Knoten zu Knoten ein kleiner zeitlicher Versatz entsteht, der über den ganzen Baum mit beispielsweise 10 Ebenen beispielsweise 10 Sekunden betragen kann.

Um zu verhindern, daß bei einem Wechsel aufgrund unterschiedlichen Zeitversatzes Lücken bei der Übertragung entstehen, wird der Datenstrom bei jedem Knoten für kurze Zeit gepuffert. Die Puffergröße wird dabei so gewählt, daß die gepufferten Daten ausreichen, den maximal möglichen Zeitversatz im gesamten Baum zu kompensieren.

Ein Knoten kann nun an die untergeordneten Knoten aktuelle Daten (mit geringem Zeitversatz) oder aus dem Puffer gespeicherte Daten mit der Zeitverzögerung übertragen, die dem Zeitversatz des untergeordneten Knotens entspricht. Insbesondere kann ein Sender verschiedene untergeordnete Knoten mit unterschiedlichen Zeitversätzen versorgen.

Wechselt nun ein Teilnehmer die Verbindung, das heißt, empfängt er die Daten von einem anderen Knoten als zuvor, so kann der Zeitversatz kompensiert werden, indem er die Daten aus dem Puffer erhält.

Ein Puffer kann etwa dadurch realisiert werden, daß der Datenstrom in numerierte Pakete zerlegt wird. Bei der Verbindungsaufnahme wird der Zeitversatz aus der Differenz der aktuellen Pakete berechnet.

Ist der gesamte maximale Zeitversatz im Baum oder eine obere Schranke davon bekannt, so können die Daten bei der Darstellung bei jedem Teilnehmer individuell so verzögert dargestellt werden, daß sie bei allen Teilnehmern gleichzeitig dargestellt werden.

## Patentansprüche

1. Verfahren zum Übertragen eines Datenstroms, von einem Produzenten an eine Mehrzahl von Zuschauern, wobei Produzent und Zuschauer Teilnehmer eines Netzwerks mit Punkt-zu-Punkt-Verbindungen sind, bei dem
- der Produzent den Datenstrom über eine Punkt-zu-Punkt-Netzwerkverbindung an zumindest einen Zuschauer überträgt,
- zumindest ein Zuschauer den Datenstrom über eine Punkt-zu-Punkt-Netzwerkverbindung empfängt und zeitnah in identischer oder reduzierter Form an zumindest einen weiteren Zuschauer überträgt,
- jeder Zuschauer entweder vom Produzenten oder einem anderen Zuschauer über eine Punkt-zu-Punkt-Netzwerkverbindung zeitnah mit dem Datenstrom in identischer oder reduzierter Form versorgt wird, und
- ein neuer Zuschauer, um Teilnehmer an der Übertragung zu werden, über eine Punkt-zu-Punkt-Netzwerkverbindung eine Teilnahmeaufforderung an eine Vermittlungsinstanz sendet,
**dadurch gekennzeichnet, dass**
die Vermittlungsinstanz sowohl Teilnahmeaufforderungen von neuen Zuschauern, deren Netzwerkkennung von einem Zugangsrechner verborgen wird als auch von neuen Zuschauern, deren Netzwerkkennung nicht verborgen wird, aufnimmt und den neuen Zuschauer jeweils durch Vermittlung eines Teilnehmers an der Übertragung, der den Datenstrom zeitnah an den neuen Zuschauer übertragen kann, als neuen Teilnehmer in die Übertragung einbindet, indem
die Vermittlungsinstanz entweder an den neuen Zuschauer oder an den vermittelten Teilnehmer direkt oder über das bestehende Punkt-zu-Punkt-Netzwerk eine Aufforderung sendet, eine Punkt-zu-Punkt-Verbindung mit dem vermittelten Teilnehmer bzw. dem neuen Zuschauer aufzubauen, über die der vermittelte Teilnehmer dem neuen Zuschauer den Datenstrom zeitnah in identischer oder reduzierter Form überträgt.

2. Übertragungsverfahren nach Anspruch 1, bei dem die Vermittlungsinstanz den neuen Zuschauer auf Sendung einer Teilnahmeaufforderung als neuen Teilnehmer in die Übertragung einbindet, indem
- die Vermittlungsinstanz feststellt, ob die Teilnahmeaufforderung von einem NAT-Zuschauer oder einem Nicht-NAT-Zuschauer gesendet wurde,
- die Vermittlungsinstanz im Fall, dass die Teilnahmeaufforderung von einem Nicht-NAT-Zuschauer gesendet wurde, dem neuen Zuschauer einen beliebigen Teilnehmer an der Übertragung vermittelt, der den Datenstrom zeitnah an den neuen Zuschauer übertragen kann, und an den vermittelten Teilnehmer direkt oder über das bestehende Punkt-zu-Punkt-Netzwerk oder an den neuen Teilnehmer oder an beide eine Aufforderung sendet, eine Punkt-zu-Punkt-Verbindung zu dem neuen Nicht-NAT-Zuschauer bzw. dem vermittelten Teilnehmer aufzubauen, über die der vermittelte Teilnehmer dem neuen Zuschauer den Datenstrom zeitnah in identischer oder reduzierter Form überträgt, und
- die Vermittlungsinstanz im Fall, dass die Teilnahmeaufforderung von einem NAT-Zuschauer gesendet wurde,
-- dem neuen Zuschauer einen NAT-Teilnehmer an der Übertragung vermittelt, der den Datenstrom zeitnah an den neuen Zuschauer übertragen kann, wenn dieser eine Verbindung zu dem neuen NAT-Zuschauer aufbauen kann, und an den vermittelten NAT-Teilnehmer direkt oder über das bestehende Punkt-zu-Punkt-Netzwerk oder dem neuen Zuschauer oder an beide eine Aufforderung sendet, eine Punkt-zu-Punkt-Verbindung zu dem neuen NAT-Zuschauer bzw. dem vermittelten Teilnehmer aufzubauen, über die der vermittelte Teilnehmer dem neuen Zuschauer den Datenstrom zeitnah in identischer oder reduzierter Form überträgt,
oder
-- dem neuen Zuschauer einen Nicht-NAT-Teilnehmer an der Übertragung vermittelt, der den Datenstrom zeitnah an den neuen Zuschauer übertragen kann, und an den neuen NAT-Zuschauer über die bestehende Punkt-zu-Punkt-Netzwerkverbindung eine Aufforderung sendet, eine Punkt-zu-Punkt-Verbindung zu dem Nicht-NAT-Teilnehmer aufzubauen, über die dieser dem neuen NAT-Zuschauer den Datenstrom zeitnah in identischer oder reduzierter Form überträgt.

3. Übertragungsverfahren nach Anspruch 1 oder 2, bei dem der Produzent ein NAT-Teilnehmer ist, dessen Netzwerkkennung von einem Zugangsrechner verborgen wird.

4. Übertragungsverfahren nach einem der vorhergehenden Ansprüche, bei dem bei Ausfall eines Zuschauers, der einen weiteren Zuschauer mit dem Datenstrom versorgt, ein anderer Teilnehmer an der Übertragung für die Versorgung des weiteren Zuschauers an Stelle des ausgefallenen Zuschauers tritt,
indem zwischen dem weiteren Zuschauer und dem anderen Teilnehmer eine Punkt-zu-Punkt-Netzwerkverbindung aufgebaut wird, über die dieser dem weiteren Zuschauer den Datenstrom zeitnah in identischer oder reduzierter Form überträgt.

5. Übertragungsverfahren nach Anspruch 4, bei dem eine Vermittlungsinstanz dem weiteren Zuschauer nach Senden einer entsprechenden Benachrichtigung den anderen Teilnehmer vermittelt, der dem weiteren Zuschauer den Datenstrom zeitnah in identischer oder reduzierter Form übertragen kann.

6. Übertragungsverfahren nach Anspruch 4 oder 5, bei dem jedem Zuschauer, der Teilnehmer der Übertragung wird,
- ein Teilnehmer an der Übertragung vermittelt wird, der den Zuschauer zeitnah mit dem Datenstrom versorgt, und
- zumindest ein weiterer Teilnehmer an der Übertragung bekannt gegeben wird, der den Datenstrom an den Zuschauer beim Ausfall des versorgenden Teilnehmers voraussichtlich zeitnah übertragen kann.

7. Übertragungsverfahren nach einem der vorhergehenden Ansprüche, bei dem die Vermittlungsinstanz dem neuen Zuschauer einen Teilnehmer an der Übertragung, der den Datenstrom zeitnah an den neuen Zuschauer übertragen kann, dadurch vermittelt, dass
a) die Vermittlungsstelle dem neuen Zuschauer über die Punkt-zu-Punkt-Netzwerkverbindung zumindest einen Teilnehmer an der Übertragung nennt,
b) geprüft wird, ob einer der genannten Teilnehmer den Datenstrom zeitnah an den neuen Zuschauer übertragen kann,
c) im Fall, dass keiner der genannten Teilnehmer selbst den Datenstrom zeitnah an den neuen Zuschauer übertragen kann, einer der genannten Teilnehmer dem neuen Zuschauer zumindest einen weiteren Teilnehmer an der Übertragung nennt, und
d) die Schritte b) und c) wiederholt werden, bis ein Teilnehmer an der Übertragung gefunden ist, der den Datenstrom zeitnah an den neuen Zuschauer übertragen kann.

8. Übertragungsverfahren nach einem der vorhergehenden Ansprüche, bei dem ein Teilnehmer, dessen Netzwerkkennung von einem Zugangsrechner verborgen wird, nur solchen neuen Zuschauern vermittelt wird, deren Netzwerkkennung nicht verborgen wird.

9. Übertragungsverfahren nach einem der vorhergehenden Ansprüche, bei dem ein Teilnehmer, dessen Netzwerkkennung von einem Zugangsrechner verborgen wird, nur dann einem Teilnehmer vermittelt wird, dessen Netzwerkkennung nicht verborgen wird, wenn dem Nicht-NAT-Teilnehmer bereits zumindest ein weiterer Nicht-NAT-Teilnehmer vermittelt ist.

10. Übertragungsverfahren nach einem der vorigen Ansprüche, bei dem
- der Produzent die Übertragung des Datenstroms vor Beginn bei einer Vermittlungsinstanz anmeldet, und
die Vermittlungsinstanz die Übertragung möglichen Zuschauern ankündigt, so dass diese über eine Punkt-zu-Punkt-Netzwerkverbindung eine Teilnahmeaufforderung an die Vermittlungsinstanz senden können.

11. Übertragungsverfahren nach Anspruch 10, bei dem die Zuschauer Beurteilungen einer Sendung oder eines Produzenten an die Vermittlungsinstanz melden, und die Vermittlungsinstanz diese Beurteilung in die Ankündigung weiter Sendungen des Produzenten einfließen lässt.

12. Übertragungsverfahren nach einem der vorigen Ansprüche, bei dem jeder Teilnehmer an der Übertragung den empfangenen Datenstrom kurzzeitig zwischenspeichert.

13. Übertragungsverfahren nach Anspruch 4 und 12, bei dem
der weitere Zuschauer von dem ausgefallen Zuschauer mit dem Datenstrom mit einem Zeitversatz Δt versorgt wurde, und der andere Teilnehmer den weiteren Zuschauer mit dem Datenstrom aus seinen zwischengespeicherten Daten mit demselben Zeitversatz Δt versorgt.

14. Übertragungsverfahren nach Anspruch 12 oder 13, bei dem der bei jedem Teilnehmer auftretende Zeitversatz bei der Übertragung des Datenstroms über den Übertragungsbaum durch Zwischenspeicherung und verzögerte Darstellung so kompensiert wird, dass jeder der Teilnehmer den Datenstrom zu selben Zeit darstellen kann.

15. Übertragungsverfahren nach einem der vorigen Ansprüche, bei dem die Teilnehmer über die bestehenden Punkt-zu-Punkt-Verbindungen mit einer Vermittlungsinstanz Verbindungsdaten an diese übertragen, die Angaben enthalten, die ausgewählt sind aus der Gruppe: Anordnung der Teilnehmer im Übertragungsbaum; aktuelle Übertragungsraten; die Anzahl der Hops zwischen den Teilnehmern; Zeitverzögerung bei der Übertragung; und Paketverlustrate auf der Übertragungsstrecke.

16. Übertragungsverfahren nach Anspruch 15, bei dem die Vermittlungsinstanz auf Grundlage der übertragenen Verbindungsdaten die Struktur des Übertragungsbaums für möglichst optimale Empfangsqualität der Teilnehmer optimiert, und entsprechende Verbindungsaufnahme-, Verbindungsabbruch- oder Verbindungsänderungsaufforderungen an die Teilnehmer sendet.

17. Übertragungsverfahren nach einem der vorigen Ansprüche, bei dem die Zuschauer über die Punkt-zu-Punkt-Verbindungen Rückmeldungen an den Produzenten oder die Vermittlungsstelle übertragen können.

18. Übertragungsverfahren nach einem der vorigen Ansprüche, bei dem der Produzent ab einem bestimmten Zeitpunkt den Datenstrom oder Teile des Datenstroms nicht mehr überträgt und ein anderer Teilnehmer für die Übertragung des Datenstroms oder der Teile des Datenstroms an Stelle des Produzenten tritt, indem
- der andere Teilnehmer die Daten über eine Punkt-zu-Punkt-Verbindung an den bisherigen Produzenten überträgt, der sie über die bestehenden Übertragungsverbindungen an die anderen Teilnehmer weiterleitet, oder indem
- der andere Teilnehmer die Daten über die bestehenden Übertragungsverbindungen an einen weiteren Teilnehmer mit ausreichender Sendekapazität weiterleitet, der den Datenstrom oder die Teile des Datenstroms über eine Punkt-zu-Punkt-Verbindung an den Produzenten überträgt.

## Claims

1. A method for transmitting a data stream from a producer to a plurality of viewers, wherein producer and viewers are subscribers in a network having point-to-point connections, in which
- the producer transmits the data stream over a point-to-point network connection to at least one viewer,
- at least one viewer receives the data stream over a point-to-point network connection and promptly transmits it in identical or reduced form to at least one additional viewer,
- every viewer is promptly supplied with the data stream in identical or reduced form by either the producer or another viewer over a point-to-point network connection, and
- a new viewer, to become a transmission subscriber, sends a subscription request to a relaying entity over a point-to-point network connection,
**characterized in that**
the relaying entity accepts subscription requests both from new viewers whose network identifier is hidden by an access computer and from new viewers whose network identifier is not hidden, and integrates each new viewer into the transmission as a new subscriber by relaying a transmission subscriber who is capable of promptly transmitting the data stream to the new viewer, **in that**
the relaying entity sends either to the new viewer or to the relayed subscriber, directly or over the existing point-to-point network, a request to set up a point-to-point connection with the relayed subscriber or the new viewer, over which the relayed subscriber promptly transmits the data stream in identical or reduced form to the new viewer.

2. The transmission method according to claim 1, in which the relaying entity integrates the new viewer, upon sending a subscription request, as a new transmission subscriber, in that
- the relaying entity determines whether the subscription request was sent from a NAT viewer or a non-NAT viewer,
- in the event that the subscription request was sent from a non-NAT viewer, the relaying entity relays to the new viewer any transmission subscriber who is capable of promptly transmitting the data stream to the new viewer, and sends a request to the relayed subscriber directly or over the existing point-to-point network, or to the new subscriber, or to both, to set up a point-to-point connection to the new non-NAT viewer or the relayed subscriber, over which the relayed subscriber promptly transmits the data stream in identical or reduced form to the new viewer, and
- in the event that the subscription request was sent from a NAT viewer, the relaying entity
-- relays to the new viewer a NAT transmission subscriber who is capable of promptly transmitting the data stream to the new viewer, if said subscriber can set up a link to the new NAT viewer, and sends to the relayed NAT subscriber, directly or over the existing point-to-point network, or to the new viewer, or to both, a request to set up a point-to-point connection to the new NAT viewer or the relayed subscriber, over which the relayed subscriber promptly transmits the data stream in identical or reduced form to the new viewer,
or
-- relays to the new viewer a non-NAT transmission subscriber who is capable of promptly transmitting the data stream to the new viewer, and sends to the new NAT viewer over the existing point-to-point network connection a request to set up a point-to-point connection to the non-NAT subscriber, over which said subscriber promptly transmits the data stream in identical or reduced form to the new NAT viewer.

3. The transmission method according to claim 1 or 2, in which the producer is a NAT subscriber whose network identifier is hidden by an access computer.

4. The transmission method according to one of the preceding claims, in which, when a viewer who supplies an additional viewer with the data stream becomes unavailable, another transmission subscriber takes the place of the unavailable viewer to supply the additional viewer,
in that a point-to-point network connection is set up between the additional viewer and the other subscriber, over which said subscriber promptly transmits the data stream in identical or reduced form to the additional viewer.

5. The transmission method according to claim 4, in which a relaying entity relays to the additional viewer, after sending an appropriate notification, the other subscriber who is capable of promptly transmitting the data stream in identical or reduced form to the additional viewer.

6. The transmission method according to claim 4 or 5, in which, to every viewer who becomes a transmission subscriber,
- a transmission subscriber is relayed who promptly supplies the viewer with the data stream, and
- at least one additional transmission subscriber is made known who is anticipated to be capable of promptly transmitting the data stream to the viewer if the supplying subscriber becomes unavailable.

7. The transmission method according to one of the preceding claims, in which the relaying entity relays to the new viewer a transmission subscriber who is capable of promptly transmitting the data stream to the new viewer, in that
a) the relaying entity names to the new viewer, over the point-to-point network connection, at least one transmission subscriber,
b) it is checked whether one of the named subscribers is capable of promptly transmitting the data stream to the new viewer,
c) in the event that none of the named subscribers themselves are capable of promptly transmitting the data stream to the new viewer, one of the named subscribers names to the new viewer at least one additional transmission subscriber, and
d) steps b) and c) are repeated until a transmission subscriber is found who is capable of promptly transmitting the data stream to the new viewer.

8. The transmission method according to one of the preceding claims, in which a subscriber whose network identifier is hidden by an access computer is relayed to only those new viewers whose network identifier is not hidden.

9. The transmission method according to one of the preceding claims, in which a subscriber whose network identifier is hidden by an access computer is relayed to a subscriber whose network identifier is not hidden only if at least one additional non-NAT subscriber is already relayed to the non-NAT subscriber.

10. The transmission method according to one of the preceding claims, in which
- the producer registers the transmission of the data stream with a relaying entity before beginning, and
the relaying entity announces the transmission to potential viewers, so that said viewers can send a subscription request to the relaying entity over a point-to-point network connection.

11. The transmission method according to claim 10, in which the viewers report ratings of a program or of a producer to the relaying entity, and the relaying entity includes this rating in the announcement of additional broadcasts of the producer.

12. The transmission method according to one of the preceding claims, in which every transmission subscriber briefly buffers the data stream received.

13. The transmission method according to claim 4 and 12, in which
the additional viewer was supplied with the data stream by the unavailable viewer with a time offset Δt, and the other subscriber supplies the additional viewer with the data stream from his buffered data with the same time offset Δt.

14. The transmission method according to claim 12 or 13, in which the time offset that occurs with every subscriber when transmitting the data stream over the transmission tree, due to buffering and delayed presentation, is compensated for such that every subscriber can display the data stream at the same time.

15. The transmission method according to one of the preceding claims, in which the subscribers transmit to a relaying entity, over the existing point-to-point connections with said relaying entity, connection data containing details selected from the group: arrangement of the subscribers in the transmission tree; current transmission rates; the number of hops between the subscribers; time delay for the transmission; and packet loss rate on the transmission path.

16. The transmission method according to claim 15, in which the relaying entity optimizes the structure of the transmission tree on the basis of the transmitted connection data for optimum possible reception quality for the subscribers, and sends appropriate connection start, connection interrupt or connection modification requests to the subscribers.

17. The transmission method according to one of the preceding claims, in which the viewers may transmit feedback to the producer or the relaying center over the point-to-point connections.

18. The transmission method according to one of the preceding claims, in which the producer, beginning at a certain point in time, no longer transmits the data stream or portions of the data stream, and another subscriber takes the place of the producer to transmit the data stream or portions of the data stream, in that
- the other subscriber transmits the data over a point-to-point connection to the previous producer, who forwards it over the existing transmission connections to the other subscribers, or in that
- the other subscriber forwards the data over the existing transmission connections to an additional subscriber having sufficient transmission capacity, who transmits the data stream or the portions of the data stream to the producer over a point-to-point connection.

## Revendications

1. Procédé de transmission d'un flux de données, d'un producteur à une pluralité de spectateurs, le producteur et les spectateurs étant des participants d'un réseau avec des liaisons point à point, dans lequel
- le producteur transmet le flux de données par le biais d'une liaison de réseau point à point à au moins un spectateur,
- au moins un spectateur reçoit le flux de données par le biais d'une liaison de réseau point à point et le transmet presque simultanément sous une forme identique ou réduite à au moins un autre spectateur,
- chaque spectateur reçoit presque simultanément soit du producteur soit d'un autre spectateur par le biais d'une liaison de réseau point à point un flux de données sous une forme identique ou réduite, et
- un nouveau spectateur, pour devenir un participant à la transmission, envoie par le biais d'une liaison de réseau point à point une demande de participation à une instance de communication,
**caractérisé en ce que**
l'instance de communication reçoit des demandes de participation de nouveaux spectateurs dont l'indicatif de réseau est caché par un ordinateur d'accès ainsi que celles de nouveaux spectateurs dont l'indicatif de réseau n'est pas caché, et intègre le nouveau spectateur dans la transmission en tant que nouveau participant à chaque fois par le biais de la communication d'un participant à la transmission qui peut transmettre le flux de données presque simultanément au nouveau spectateur, par le fait que
l'instance de communication envoie soit au nouveau spectateur soit au participant communiqué, directement ou par le biais du réseau point à point existant, une demande d'établir avec le participant communiqué ou avec le nouveau spectateur une liaison point à point par laquelle le participant communiqué transmet au nouveau spectateur le flux de données presque simultanément sous une forme identique ou réduite.

2. Procédé de transmission selon la revendication 1, dans lequel l'instance de communication intègre le nouveau spectateur dans la transmission lors de l'envoi d'une demande de participation en tant que nouveau participant, par le fait que
- l'instance de communication détermine si la demande de participation a été envoyée par un spectateur NAT ou un spectateur non NAT,
- l'instance de communication, dans le cas où la demande de participation a été envoyée par un spectateur non NAT, communique au nouveau spectateur un participant quelconque à la transmission qui peut transmettre le flux de données presque simultanément au nouveau spectateur, et envoie au participant communiqué, directement ou par le biais du réseau point à point existant, ou au nouveau participant ou aux deux, une demande d'établir une liaison point à point au nouveau spectateur non NAT respectivement au participant communiqué par laquelle le participant communiqué transmet au nouveau spectateur le flux de données presque simultanément sous une forme identique ou réduite, et
- l'instance de communication, dans le cas où la demande de participation a été envoyée par un spectateur NAT,
- communique au nouveau spectateur un participant NAT à la transmission qui peut transmettre le flux de données presque simultanément au nouveau spectateur, si celui-ci peut établir une liaison au nouveau spectateur NAT, et elle envoie au participant NAT communiqué, directement ou par le biais du réseau point à point existant, ou au nouveau spectateur ou aux deux, une demande d'établir une liaison point à point au nouveau spectateur NAT respectivement au participant communiqué par laquelle le participant communiqué transmet au nouveau spectateur le flux de données presque simultanément sous une forme identique ou réduite,
ou
- communique au nouveau spectateur un participant non NAT à la transmission qui peut transmettre le flux de données presque simultanément au nouveau spectateur, et envoie au nouveau spectateur NAT, par le biais de la liaison de réseau point à point existante, une demande d'établir une liaison point à point au participant non NAT par laquelle celui-ci transmet au nouveau spectateur NAT le flux de données presque simultanément sous une forme identique ou réduite.

3. Procédé de transmission selon la revendication 1 ou 2, par lequel le producteur est un participant NAT dont l'indicatif de réseau est caché par un ordinateur d'accès.

4. Procédé de transmission selon l'une des revendications précédentes, par lequel en cas de disparition d'un spectateur qui fournit à un autre spectateur le flux de données, un autre participant à la transmission remplace le spectateur disparu pour la fourniture à l'autre spectateur,
par le fait qu'il est établi entre l'autre spectateur et l'autre participant une liaison de réseau point à point par laquelle celui-ci transmet à l'autre spectateur le flux de données presque simultanément sous une forme identique ou réduite.

5. Procédé de transmission selon la revendication 4, par lequel une instance de communication communique à l'autre spectateur après l'envoi d'une information correspondante l'autre participant qui peut transmettre à l'autre spectateur le flux de données presque simultanément sous une forme identique ou réduite.

6. Procédé de transmission selon la revendication 4 ou 5, par lequel à chaque spectateur, qui devient participant à la transmission,
- est communiqué un participant à la transmission qui fournit au spectateur presque simultanément le flux de données, et
- est porté à connaissance au moins un autre participant à la transmission qui transmet presque simultanément le flux de données au spectateur en cas de disparition du participant fournisseur.

7. Procédé de transmission selon l'une des revendications précédentes, par lequel l'instance de communication communique au nouveau spectateur un participant à la transmission, qui peut transmettre le flux de données presque simultanément au nouveau spectateur, de telle sorte
a) que la centrale de communication désigne au nouveau spectateur, par la liaison de réseau point à point, au moins un participant à la transmission,
b) qu'il soit vérifié si un des participants désignés peut transmettre le flux de données presque simultanément au nouveau spectateur,
c) que dans le cas où aucun des participants désignés ne peut lui-même transmettre le flux de données presque simultanément au nouveau spectateur, un des participants désignés désigne au nouveau spectateur au moins un autre participant à la transmission, et
d) que les étapes b) et c) soient répétées jusqu'à ce que soit trouvé un participant à la transmission qui puisse transmettre le flux de données presque simultanément au nouveau spectateur.

8. Procédé de transmission selon l'une des revendications précédentes, par lequel un participant, dont l'indicatif de réseau est caché par un ordinateur d'accès, n'est communiqué qu'à de nouveaux spectateurs dont l'indicatif de réseau n'est pas caché.

9. Procédé de transmission selon l'une des revendications précédentes, par lequel un participant, dont l'indicatif de réseau est caché par un ordinateur d'accès, n'est communiqué ensuite qu'à un participant dont l'indicatif de réseau n'est pas caché si au moins un autre participant non NAT a déjà été communiqué au participant non NAT.

10. Procédé de transmission selon l'une des revendications précédentes, par lequel
- le producteur annonce auprès d'une instance de communication la transmission du flux de données avant le début, et
- l'instance de communication avertit les éventuels spectateurs de la transmission de sorte que ceux-ci puissent envoyer une demande de participation à l'instance de communication par le biais d'une liaison de réseau point à point.

11. Procédé de transmission selon la revendication 10, par lequel les spectateurs annoncent à l'instance de communication des avis sur une émission ou un producteur, et l'instance de communication fait entrer en ligne de compte ces avis dans l'annonce d'autres émissions du producteur.

12. Procédé de transmission selon l'une des revendications précédentes, par lequel chaque participant à la transmission enregistre temporairement le flux de données reçu.

13. Procédé de transmission selon les revendications 4 et 12, par lequel l'autre spectateur a reçu du spectateur disparu le flux de données avec un décalage temporel Δt, et l'autre participant fournit à l'autre spectateur avec le même décalage temporel Δt le flux de données à partir de ses données enregistrées temporairement.

14. Procédé de transmission selon la revendication 12 ou 13, par lequel le décalage temporel survenant pour chaque participant lors de la transmission du flux de données par le biais de l'arbre de transmission est compensé par l'enregistrement provisoire et une représentation retardée de manière telle que chaque participant puisse représenter le flux de données en même temps.

15. Procédé de transmission selon l'une des revendications précédentes, par lequel les participants, par le biais des liaisons point à point existantes avec une instance de communication, transmettent à celle-ci des données de liaison qui contiennent des indications qui sont choisies parmi le groupe : disposition des participants dans l'arbre de transmission ; taux de transmission courants ; le nombre de bonds (de transmission) entre les participants ; retard temporel lors de la transmission ; et taux de perte de paquets sur la voie de transmission.

16. Procédé de transmission selon la revendication 15, par lequel l'instance de communication sur la base des données de liaison transmises optimise la structure de l'arbre de transmission pour obtenir la qualité de réception optimale des participants, et envoie aux participants des demandes correspondantes de prise de liaison, de coupure de liaison ou de modification de liaison.

17. Procédé de transmission selon l'une des revendications précédentes, par lequel les spectateurs peuvent transmettre par le biais des liaisons point à point des informations en retour au producteur ou à la centrale de communication.

18. Procédé de transmission selon l'une des revendications précédentes, par lequel le producteur ne transmet plus à partir d'un certain moment le flux de données ou des parties du flux de données et un autre participant remplace le producteur pour la transmission du flux de données ou des parties du flux de données, par le fait que
- l'autre participant transmet les données par le biais d'une liaison point à point au producteur actuel qui les communique par les liaisons de transmission existantes aux autres participants ou par le fait que
- l'autre participant communique les données par les liaisons de transmission existantes à un autre participant qui a une capacité d'envoi suffisante et qui transmet au producteur le flux de données ou les parties du flux de données par le biais d'une liaison point à point.
